# EUROPEAN PATENT SPECIFICATION

(11) **EP 3 938 905 B1**
(45) Date of publication and mention of the grant of the patent: **17.04.2024**
(21) Application number: 20718893.9
(22) Date of filing: 13.03.2020
(51) Int. Cl.: G06F 9/50, G06F 21/57, G06F 21/52

(54) **SYSTEMS AND METHODS FOR IDENTIFYING AND MONITORING SOLUTION STACKS**
SYSTEME UND VERFAHREN ZUR IDENTIFIZIERUNG UND ÜBERWACHUNG VON LÖSUNGSSTAPELN
SYSTÈMES ET PROCÉDÉS D'IDENTIFICATION ET DE SURVEILLANCE DES PILES DE SOLUTIONS

(30) Priority: 15.03.2019 US 201962819369 P; 27.11.2019 US 201962941537 P
(43) Date of publication of application: 19.01.2022
(73) Proprietor: Acentium Inc., Boston, Massachusetts 02123 (US)
(72) Inventor: HAMDI, Amine, Boston, Massachusetts 02114 (US)
(74) Representative: Murgitroyd & Company
(86) International application number: PCT/US2020/022762
(87) International publication number: WO 2020/190775

(56) References cited:
- US-A1- 2011 246 748
- US-A1- 2015 172 308

## Description

### CROSS-REFEERENCE TO RELATED APPLICATIONS

This application claims priority to U.S. provisional application No. 62/819,369 filed on March 15, 2019, and entitled "SYSTEMS AND METHODS FOR IDENTIFYING AND MONITORING SOLUTION STACKS," and U.S. provisional application No. 62/941,537 filed on November 27, 2019, and entitled "SYSTEMS AND METHODS FOR IDENTIFYING AND MONITORING SOLUTION STACKS."

### FIELD OF THE DISCLOSURE

The present application relates generally to systems and methods for identifying, monitoring and managing solution systems within a computer environment. Specifically, the present application relates to identifying, monitoring and managing solutions stacks and/or corresponding infrastructure.

### BACKGROUND

Most institutions rely heavily on their computer enterprise networks (or computer environments) with regard to executing daily business operations. The functional importance and business value of the computer environments for respective institutions and their customers call for reliable management security of such computer environments. As these computer environments get larger and larger, e.g., in terms of the number and variety of respective assets, the task of managing and securing gets more complex and more burdensome. In particular, as the number of assets of a computer environment increases, the number of respective parameters or aspects to be to be monitored increases by many folds. Such increase makes it inefficient and impractical to monitor all respective parameters or aspects of the computer environment in real time.

US 2015/172308 A1 describes identifying security exposures that may exist within the solution stack utilized in the implementation of an Internet Web site.

### SUMMARY

According to one aspect, a method according to claim 1, a computer-readable medium according to claim 8 and a system according to claim 9 are provided.

### BRIEF DESCRIPTION OF THE DRAWINGS

FIG. 1A is a block diagram depicting an embodiment of a computing and network environment.
FIGS. 1B-1D are block diagrams depicting embodiments of computers useful in connection with the methods and systems described herein.
FIG. 2 is a block diagram illustrating an example computer environment hosting a plurality of IT (or software) solutions.
FIG. 3 shows a block diagram illustrating various phases, states or aspects of a solution.
FIG. 4 shows a flowchart illustrating a method of identifying a current state of a deployed solution stack, according to example embodiments.
FIGS. 5A and 5B show block diagrams illustrating example reference and reconstructed architectures of a SKYPE for Business solution within a given geographical location.
FIGS. 6A-6C show block diagrams illustrating 2D representations of various versions of the reconstructed architecture in FIG. 5B.
FIGS. 7A-7C show interactive 3D representations of the current architecture of the SKYPE for Business solution in the Boston area corresponding respectively to the 2D representations in FIGS. 5B, 6A and 6C.
FIG. 8 shows a flowchart illustrating a method of monitoring deployed solution stacks according to example embodiments.
FIGS. 9-15 show various screenshots of a UI for displaying solution monitoring data.

### DETAILED DESCRIPTION

For purposes of reading the description of the various embodiments below, the following descriptions of the sections of the specification and their respective contents may be helpful:
Section A describes a computing and network environment which may be useful for practicing embodiments described herein.
Section B describes systems and methods for solution stack identification.
Section C describes systems and methods for solution stack monitoring.
Section D describes solution stack as an IT diagnosis tool.

### A. Computing and Network Environment

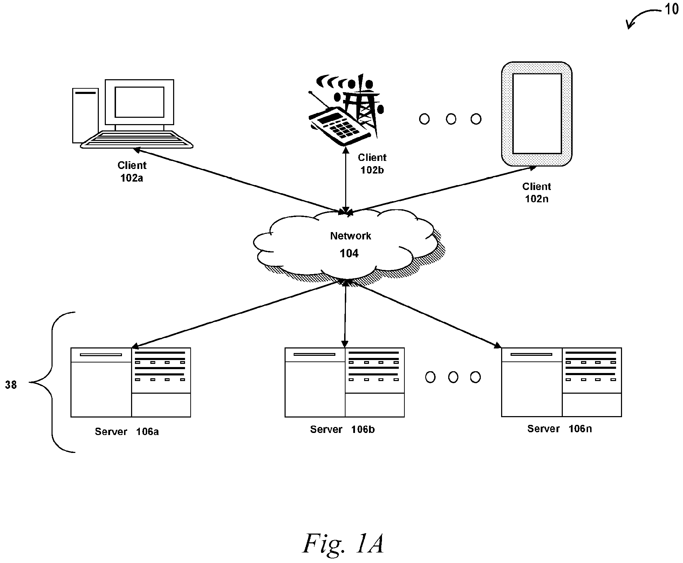

In addition to discussing specific embodiments of the present solution, it may be helpful to describe aspects of the operating environment as well as associated system components (e.g., hardware elements) in connection with the methods and systems described herein. Referring to FIG. 1A, an embodiment of a computing and network environment 10 is depicted. In brief overview, the computing and network environment includes one or more clients 102a-102n (also generally referred to as local machine(s) 102, client(s) 102, client node(s) 102, client machine(s) 102, client computer(s) 102, client device(s) 102, endpoint(s) 102, or endpoint node(s) 102) in communication with one or more servers 106a-106n (also generally referred to as server(s) 106, node 106, or remote machine(s) 106) via one or more networks 104. In some embodiments, a client 102 has the capacity to function as both a client node seeking access to resources provided by a server and as a server providing access to hosted resources for other clients 102a-102n.

Although FIG. 1A shows a network 104 between the clients 102 and the servers 106, the clients 102 and the servers 106 may be on the same network 104. In some embodiments, there are multiple networks 104 between the clients 102 and the servers 106. In one of these embodiments, a network 104' (not shown) may be a private network and a network 104 may be a public network. In another of these embodiments, a network 104 may be a private network and a network 104' a public network. In still another of these embodiments, networks 104 and 104' may both be private networks.

The network 104 may be connected via wired or wireless links. Wired links may include Digital Subscriber Line (DSL), coaxial cable lines, or optical fiber lines. The wireless links may include BLUETOOTH, Wi-Fi, Worldwide Interoperability for Microwave Access (WiMAX), an infrared channel or satellite band. The wireless links may also include any cellular network standards used to communicate among mobile devices, including standards that qualify as 1G, 2G, 3G, or 4G. The network standards may qualify as one or more generation of mobile telecommunication standards by fulfilling a specification or standards such as the specifications maintained by International Telecommunication Union. The 3G standards, for example, may correspond to the International Mobile Telecommunications-2000 (IMT-2000) specification, and the 1G standards may correspond to the International Mobile Telecommunications Advanced (IMT-Advanced) specification. Examples of cellular network standards include AMPS, GSM, GPRS, UMTS, LTE, LTE Advanced, Mobile WiMAX, and WiMAX-Advanced. Cellular network standards may use various channel access methods e.g. FDMA, TDMA, CDMA, or SDMA. In some embodiments, different types of data may be transmitted via different links and standards. In other embodiments, the same types of data may be transmitted via different links and standards.

The network 104 may be any type and/or form of network. The geographical scope of the network 104 may vary widely and the network 104 can be a body area network (BAN), a personal area network (PAN), a local-area network (LAN), e.g. Intranet, a metropolitan area network (MAN), a wide area network (WAN), or the Internet. The topology of the network 104 may be of any form and may include, e.g., any of the following: point-to-point, bus, star, ring, mesh, or tree. The network 104 may be an overlay network which is virtual and sits on top of one or more layers of other networks 104'. The network 104 may be of any such network topology as known to those ordinarily skilled in the art capable of supporting the operations described herein. The network 104 may utilize different techniques and layers or stacks of protocols, including, e.g., the Ethernet protocol, the internet protocol suite (TCP/IP), the ATM (Asynchronous Transfer Mode) technique, the SONET (Synchronous Optical Networking) protocol, or the SDH (Synchronous Digital Hierarchy) protocol. The TCP/IP internet protocol suite may include application layer, transport layer, internet layer (including, e.g., IPv6), or the link layer. The network 104 may be a type of a broadcast network, a telecommunications network, a data communication network, or a computer network.

In some embodiments, the computing and network environment 10 may include multiple, logically-grouped servers 106. In one of these embodiments, the logical group of servers may be referred to as a server farm 38 or a machine farm 38. In another of these embodiments, the servers 106 may be geographically dispersed. In other embodiments, a machine farm 38 may be administered as a single entity. In still other embodiments, the machine farm 38 includes a plurality of machine farms 38. The servers 106 within each machine farm 38 can be heterogeneous - one or more of the servers 106 or machines 106 can operate according to one type of operating system platform (e.g., WINDOWS 8 or 10, manufactured by Microsoft Corp. of Redmond, Washington), while one or more of the other servers 106 can operate on according to another type of operating system platform (e.g., Unix, Linux, or Mac OS X).

In one embodiment, servers 106 in the machine farm 38 may be stored in high-density rack systems, along with associated storage systems, and located in an enterprise data center. In this embodiment, consolidating the servers 106 in this way may improve system manageability, data security, the physical security of the system, and system performance by locating servers 106 and high performance storage systems on localized high performance networks. Centralizing the servers 106 and storage systems and coupling them with advanced system management tools allows more efficient use of server resources.

The servers 106 of each machine farm 38 do not need to be physically proximate to another server 106 in the same machine farm 38. Thus, the group of servers 106 logically grouped as a machine farm 38 may be interconnected using a wide-area network (WAN) connection or a metropolitan-area network (MAN) connection. For example, a machine farm 38 may include servers 106 physically located in different continents or different regions of a continent, country, state, city, campus, or room. Data transmission speeds between servers 106 in the machine farm 38 can be increased if the servers 106 are connected using a local-area network (LAN) connection or some form of direct connection. Additionally, a heterogeneous machine farm 38 may include one or more servers 106 operating according to a type of operating system, while one or more other servers 106 execute one or more types of hypervisors rather than operating systems. In these embodiments, hypervisors may be used to emulate virtual hardware, partition physical hardware, virtualize physical hardware, and execute virtual machines that provide access to computing environments, allowing multiple operating systems to run concurrently on a host computer. Native hypervisors may run directly on the host computer. Hypervisors may include VMware ESX/ESXi, manufactured by VMWare, Inc., of Palo Alto, California; the Xen hypervisor, an open source product whose development is overseen by Citrix Systems, Inc.; the HYPER-V hypervisors provided by Microsoft or others. Hosted hypervisors may run within an operating system on a second software level. Examples of hosted hypervisors may include VMware Workstation and VIRTUALBOX.

Management of the machine farm 38 may be de-centralized. For example, one or more servers 106 may comprise components, subsystems and modules to support one or more management services for the machine farm 38. In one of these embodiments, one or more servers 106 provide functionality for management of dynamic data, including techniques for handling failover, data replication, and increasing the robustness of the machine farm 38. Each server 106 may communicate with a persistent store and, in some embodiments, with a dynamic store.

Server 106 may be a file server, application server, web server, proxy server, appliance, network appliance, gateway, gateway server, virtualization server, deployment server, SSL VPN server, firewall, Internet of Things (IoT) controller. In one embodiment, the server 106 may be referred to as a remote machine or a node. In another embodiment, a plurality of nodes 290 may be in the path between any two communicating servers.

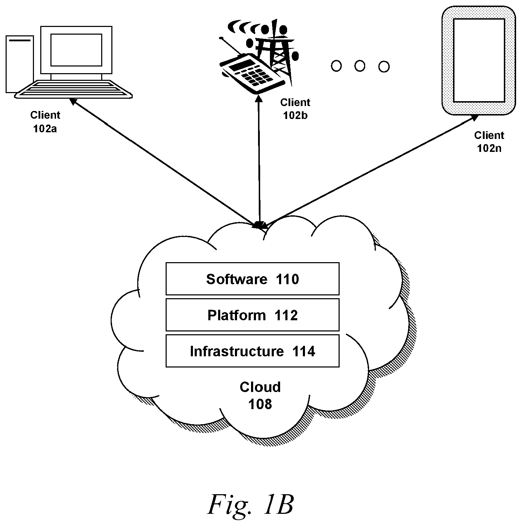

Referring to Fig. 1B, a cloud computing environment is depicted. The cloud computing environment can be part of the computing and network environment 10. A cloud computing environment may provide client 102 with one or more resources provided by the computing and network environment 10. The cloud computing environment may include one or more clients 102a-102n, in communication with the cloud 108 over one or more networks 104. Clients 102 may include, e.g., thick clients, thin clients, and zero clients. A thick client may provide at least some functionality even when disconnected from the cloud 108 or servers 106. A thin client or a zero client may depend on the connection to the cloud 108 or server 106 to provide functionality. A zero client may depend on the cloud 108 or other networks 104 or servers 106 to retrieve operating system data for the client device. The cloud 108 may include back end platforms, e.g., servers 106, storage, server farms or data centers.

The cloud 108 may be public, private, or hybrid. Public clouds may include public servers 106 that are maintained by third parties to the clients 102 or the owners of the clients. The servers 106 may be located off-site in remote geographical locations as disclosed above or otherwise. Public clouds may be connected to the servers 106 over a public network. Private clouds may include private servers 106 that are physically maintained by clients 102 or owners of clients. Private clouds may be connected to the servers 106 over a private network 104. Hybrid clouds 108 may include both the private and public networks 104 and servers 106.

The cloud 108 may also include a cloud based delivery, e.g. Software as a Service (SaaS) 110, Platform as a Service (PaaS) 112, and Infrastructure as a Service (IaaS) 114. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, Google Compute Engine provided by Google Inc. of Mountain View, California, or RIGHTSCALE provided by RightScale, Inc., of Santa Barbara, California. PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California. SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g. DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Clients 102 may access IaaS resources with one or more IaaS standards, including, e.g., Amazon Elastic Compute Cloud (EC2), Open Cloud Computing Interface (OCCI), Cloud Infrastructure Management Interface (CIMI), or OpenStack standards. Some IaaS standards may allow clients access to resources over HTTP, and may use Representational State Transfer (REST) protocol or Simple Object Access Protocol (SOAP). Clients 102 may access PaaS resources with different PaaS interfaces. Some PaaS interfaces use HTTP packages, standard Java APIs, JavaMail API, Java Data Objects (JDO), Java Persistence API (JPA), Python APIs, web integration APIs for different programming languages including, e.g., Rack for Ruby, WSGI for Python, or PSGI for Perl, or other APIs that may be built on REST, HTTP, XML, or other protocols. Clients 102 may access SaaS resources through the use of web-based user interfaces, provided by a web browser (e.g. GOOGLE CHROME, Microsoft INTERNET EXPLORER, or Mozilla Firefox provided by Mozilla Foundation of Mountain View, California). Clients 102 may also access SaaS resources through smartphone or tablet applications, including, for example, Salesforce Sales Cloud, or Google Drive app. Clients 102 may also access SaaS resources through the client operating system, including, e.g., Windows file system for DROPBOX.

In some embodiments, access to IaaS, PaaS, or SaaS resources may be authenticated. For example, a server or authentication server may authenticate a user via security certificates, HTTPS, or API keys. API keys may include various encryption standards such as, e.g., Advanced Encryption Standard (AES). Data resources may be sent over Transport Layer Security (TLS) or Secure Sockets Layer (SSL).

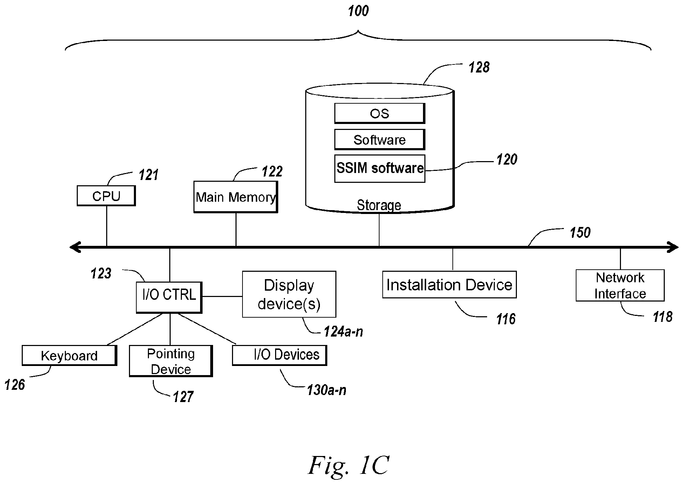

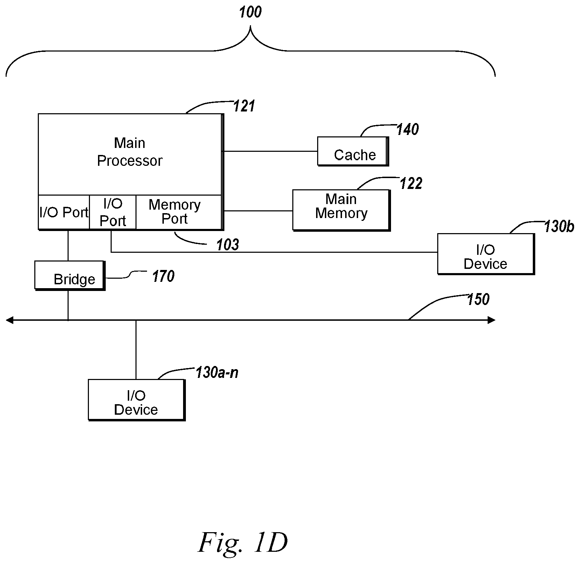

The client 102 and server 106 may be deployed as and/or executed on any type and form of computing device, e.g. a computer, network device or appliance capable of communicating on any type and form of network and performing the operations described herein. FIGS. 1C and 1D depict block diagrams of a computing device 100 useful for practicing an embodiment of the client 102 or a server 106. As shown in FIGS. 1C and 1D, each computing device 100 includes a central processing unit 121, and a main memory unit 122. As shown in FIG. 1C, a computing device 100 may include a storage device 128, an installation device 116, a network interface 118, an I/O controller 123, display devices 124a-124n, a keyboard 126 and a pointing device 127, e.g. a mouse. The storage device 128 may include, without limitation, an operating system, software, and a software of a solution stack identification and monitoring (SSIM) system. As shown in FIG. 1D, each computing device 100 may also include additional optional elements, e.g. a memory port 103, a bridge 170, one or more input/output devices 130a-130n (generally referred to using reference numeral 130), and a cache memory 140 in communication with the central processing unit 121.

The central processing unit 121 is any logic circuitry that responds to and processes instructions fetched from the main memory unit 122. In many embodiments, the central processing unit 121 is provided by a microprocessor unit, e.g.: those manufactured by Intel Corporation of Mountain View, California; those manufactured by Motorola Corporation of Schaumburg, Illinois; the ARM processor and TEGRA system on a chip (SoC) manufactured by Nvidia of Santa Clara, California; the POWER7 processor, those manufactured by International Business Machines of White Plains, New York; or those manufactured by Advanced Micro Devices of Sunnyvale, California. The computing device 100 may be based on any of these processors, or any other processor capable of operating as described herein. The central processing unit 121 may utilize instruction level parallelism, thread level parallelism, different levels of cache, and multi-core processors. A multi-core processor may include two or more processing units on a single computing component. Examples of a multi-core processors include the AMD PHENOM IIX2, INTEL CORE i5 and INTEL CORE i7.

Main memory unit 122 may include one or more memory chips capable of storing data and allowing any storage location to be directly accessed by the microprocessor 121. Main memory unit 122 may be volatile and faster than storage 128 memory. Main memory units 122 may be Dynamic random access memory (DRAM) or any variants, including static random access memory (SRAM), Burst SRAM or SynchBurst SRAM (BSRAM), Fast Page Mode DRAM (FPM DRAM), Enhanced DRAM (EDRAM), Extended Data Output RAM (EDO RAM), Extended Data Output DRAM (EDO DRAM), Burst Extended Data Output DRAM (BEDO DRAM), Single Data Rate Synchronous DRAM (SDR SDRAM), Double Data Rate SDRAM (DDR SDRAM), Direct Rambus DRAM (DRDRAM), or Extreme Data Rate DRAM (XDR DRAM). In some embodiments, the main memory 122 or the storage 128 may be non-volatile; e.g., non-volatile read access memory (NVRAM), flash memory non-volatile static RAM (nvSRAM), Ferroelectric RAM (FeRAM), Magnetoresistive RAM (MRAM), Phase-change memory (PRAM), conductive-bridging RAM (CBRAM), Silicon-Oxide-Nitride-Oxide-Silicon (SONOS), Resistive RAM (RRAM), Racetrack, Nano-RAM (NRAM), or Millipede memory. The main memory 122 may be based on any of the above described memory chips, or any other available memory chips capable of operating as described herein. In the embodiment shown in FIG. 1C, the processor 121 communicates with main memory 122 via a system bus 150 (described in more detail below). FIG. 1D depicts an embodiment of a computing device 100 in which the processor communicates directly with main memory 122 via a memory port 103. For example, in FIG. 1D the main memory 122 may be DRDRAM.

FIG. 1D depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory 122 and is typically provided by SRAM, BSRAM, or EDRAM. In the embodiment shown in FIG. 1D, the processor 121 communicates with various I/O devices 130 via a local system bus 150. Various buses may be used to connect the central processing unit 121 to any of the I/O devices 130, including a PCI bus, a PCI-X bus, or a PCI-Express bus, or a NuBus. For embodiments in which the I/O device is a video display 124, the processor 121 may use an Advanced Graphics Port (AGP) to communicate with the display 124 or the I/O controller 123 for the display 124. FIG. 1D depicts an embodiment of a computer 100 in which the main processor 121 communicates directly with I/O device 130b or other processors 121' via HYPERTRANSPORT, RAPIDIO, or INFINIBAND communications technology. FIG. 1D also depicts an embodiment in which local busses and direct communication are mixed: the processor 121 communicates with I/O device 130a using a local interconnect bus while communicating with I/O device 130b directly.

A wide variety of I/O devices 130a-130n may be present in the computing device 100. Input devices may include keyboards, mice, trackpads, trackballs, touchpads, touch mice, multi-touch touchpads and touch mice, microphones, multi-array microphones, drawing tablets, cameras, single-lens reflex camera (SLR), digital SLR (DSLR), CMOS sensors, accelerometers, infrared optical sensors, pressure sensors, magnetometer sensors, angular rate sensors, depth sensors, proximity sensors, ambient light sensors, gyroscopic sensors, or other sensors. Output devices may include video displays, graphical displays, speakers, headphones, inkjet printers, laser printers, and 3D printers.

Devices 130a-130n may include a combination of multiple input or output devices, including, e.g., Microsoft KINECT, Nintendo Wiimote for the WII, Nintendo WII U GAMEPAD, or Apple IPHONE. Some devices 130a-130n allow gesture recognition inputs through combining some of the inputs and outputs. Some devices 130a-130n provides for facial recognition which may be utilized as an input for different purposes including authentication and other commands. Some devices 130a-130n provides for voice recognition and inputs, including, e.g., Microsoft KINECT, SIRI for IPHONE by Apple, Google Now or Google Voice Search.

Additional devices 130a-130n have both input and output capabilities, including, e.g., haptic feedback devices, touchscreen displays, or multi-touch displays. Touchscreen, multi-touch displays, touchpads, touch mice, or other touch sensing devices may use different technologies to sense touch, including, e.g., capacitive, surface capacitive, projected capacitive touch (PCT), in-cell capacitive, resistive, infrared, waveguide, dispersive signal touch (DST), in-cell optical, surface acoustic wave (SAW), bending wave touch (BWT), or force-based sensing technologies. Some multi-touch devices may allow two or more contact points with the surface, allowing advanced functionality including, e.g., pinch, spread, rotate, scroll, or other gestures. Some touchscreen devices, including, e.g., Microsoft PIXELSENSE or Multi-Touch Collaboration Wall, may have larger surfaces, such as on a table-top or on a wall, and may also interact with other electronic devices. Some I/O devices 130a-130n, display devices 124a-124n or group of devices may be augment reality devices. The I/O devices may be controlled by an I/O controller 123 as shown in FIG. 1C. The I/O controller may control one or more I/O devices, such as, e.g., a keyboard 126 and a pointing device 127, e.g., a mouse or optical pen. Furthermore, an I/O device may also provide storage and/or an installation medium 116 for the computing device 100. In still other embodiments, the computing device 100 may provide USB connections (not shown) to receive handheld USB storage devices. In further embodiments, an I/O device 130 may be a bridge between the system bus 150 and an external communication bus, e.g. a USB bus, a SCSI bus, a FireWire bus, an Ethernet bus, a Gigabit Ethernet bus, a Fibre Channel bus, or a Thunderbolt bus.

In some embodiments, display devices 124a-124n may be connected to I/O controller 123. Display devices may include, e.g., liquid crystal displays (LCD), thin film transistor LCD (TFT-LCD), blue phase LCD, electronic papers (e-ink) displays, flexile displays, light emitting diode displays (LED), digital light processing (DLP) displays, liquid crystal on silicon (LCOS) displays, organic light-emitting diode (OLED) displays, active-matrix organic light-emitting diode (AMOLED) displays, liquid crystal laser displays, time-multiplexed optical shutter (TMOS) displays, or 3D displays. Examples of 3D displays may use, e.g. stereoscopy, polarization filters, active shutters, or autostereoscopy. Display devices 124a-124n may also be a head-mounted display (HMD). In some embodiments, display devices 124a-124n or the corresponding I/O controllers 123 may be controlled through or have hardware support for OPENGL or DIRECTX API or other graphics libraries.

In some embodiments, the computing device 100 may include or connect to multiple display devices 124a-124n, which each may be of the same or different type and/or form. As such, any of the I/O devices 130a-130n and/or the I/O controller 123 may include any type and/or form of suitable hardware, software, or combination of hardware and software to support, enable or provide for the connection and use of multiple display devices 124a-124n by the computing device 100. For example, the computing device 100 may include any type and/or form of video adapter, video card, driver, and/or library to interface, communicate, connect or otherwise use the display devices 124a-124n. In one embodiment, a video adapter may include multiple connectors to interface to multiple display devices 124a-124n. In other embodiments, the computing device 100 may include multiple video adapters, with each video adapter connected to one or more of the display devices 124a-124n. In some embodiments, any portion of the operating system of the computing device 100 may be configured for using multiple displays 124a-124n. In other embodiments, one or more of the display devices 124a-124n may be provided by one or more other computing devices 100a or 100b connected to the computing device 100, via the network 104. In some embodiments software may be designed and constructed to use another computer's display device as a second display device 124a for the computing device 100. For example, in one embodiment, an Apple iPad may connect to a computing device 100 and use the display of the device 100 as an additional display screen that may be used as an extended desktop. One ordinarily skilled in the art will recognize and appreciate the various ways and embodiments that a computing device 100 may be configured to have multiple display devices 124a-124n.

Referring again to FIG. 1C, the computing device 100 may comprise a storage device 128 (e.g. one or more hard disk drives or redundant arrays of independent disks) for storing an operating system or other related software, and for storing application software programs such as any program related to the SSIM software 120. Examples of storage device 128 include, e.g., hard disk drive (HDD); optical drive including CD drive, DVD drive, or BLU-RAY drive; solid-state drive (SSD); USB flash drive; or any other device suitable for storing data. Some storage devices may include multiple volatile and non-volatile memories, including, e.g., solid state hybrid drives that combine hard disks with solid state cache. Some storage device 128 may be non-volatile, mutable, or read-only. Some storage device 128 may be internal and connect to the computing device 100 via a bus 150. Some storage device 128 may be external and connect to the computing device 100 via a I/O device 130 that provides an external bus. Some storage device 128 may connect to the computing device 100 via the network interface 118 over a network 104, including, e.g., the Remote Disk for MACBOOK AIR by Apple. Some client devices 100 may not require a non-volatile storage device 128 and may be thin clients or zero clients 102. Some storage device 128 may also be used as an installation device 116, and may be suitable for installing software and programs. Additionally, the operating system and the software can be run from a bootable medium, for example, a bootable CD, e.g. KNOPPIX, a bootable CD for GNU/Linux that is available as a GNU/Linux distribution from knoppix.net.

Client device 100 may also install software or application from an application distribution platform. Examples of application distribution platforms include the App Store for iOS provided by Apple, Inc., the Mac App Store provided by Apple, Inc., GOOGLE PLAY for Android OS provided by Google Inc., Chrome Webstore for CHROME OS provided by Google Inc., and Amazon Appstore for Android OS and KINDLE FIRE provided by Amazon.com, Inc. An application distribution platform may facilitate installation of software on a client device 102. An application distribution platform may include a repository of applications on a server 106 or a cloud 108, which the clients 102a-102n may access over a network 104. An application distribution platform may include application developed and provided by various developers. A user of a client device 102 may select, purchase and/or download an application via the application distribution platform.

Furthermore, the computing device 100 may include a network interface 118 to interface to the network 104 through a variety of connections including, but not limited to, standard telephone lines LAN or WAN links (*e.g.,* 802.11, T1, T3, Gigabit Ethernet, Infiniband), broadband connections (e.g., ISDN, Frame Relay, ATM, Gigabit Ethernet, Ethernet-over-SONET, ADSL, VDSL, BPON, GPON, fiber optical including FiOS), wireless connections, or some combination of any or all of the above. Connections can be established using a variety of communication protocols (e.g., TCP/IP, Ethernet, ARCNET, SONET, SDH, Fiber Distributed Data Interface (FDDI), IEEE 802.11a/b/g/n/ac CDMA, GSM, WiMax and direct asynchronous connections). In one embodiment, the computing device 100 communicates with other computing devices 100' via any type and/or form of gateway or tunneling protocol e.g. Secure Socket Layer (SSL) or Transport Layer Security (TLS), or the Citrix Gateway Protocol manufactured by Citrix Systems, Inc. of Ft. Lauderdale, Florida. The network interface 118 may comprise a built-in network adapter, network interface card, PCMCIA network card, EXPRESSCARD network card, card bus network adapter, wireless network adapter, USB network adapter, modem or any other device suitable for interfacing the computing device 100 to any type of network capable of communication and performing the operations described herein.

A computing device 100 of the sort depicted in FIGS. 1B and 1C may operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: WINDOWS 2000, WINDOWS Server 2012, WINDOWS CE, WINDOWS Phone, WINDOWS XP, WINDOWS VISTA, and WINDOWS 7, WINDOWS RT, and WINDOWS 8 all of which are manufactured by Microsoft Corporation of Redmond, Washington; MAC OS and iOS, manufactured by Apple, Inc. of Cupertino, California; and Linux, a freely-available operating system, e.g. Linux Mint distribution ("distro") or Ubuntu, distributed by Canonical Ltd. of London, United Kingdom; or Unix or other Unix-like derivative operating systems; and Android, designed by Google, of Mountain View, California, among others. Some operating systems, including, e.g., the CHROME OS by Google, may be used on zero clients or thin clients, including, e.g., CHROMEBOOKS.

The computer system 100 can be any workstation, telephone, desktop computer, laptop or notebook computer, netbook, ULTRABOOK, tablet, server, handheld computer, mobile telephone, smartphone or other portable telecommunications device, media playing device, a gaming system, mobile computing device, or any other type and/or form of computing, telecommunications or media device that is capable of communication. The computer system 100 has sufficient processor power and memory capacity to perform the operations described herein. In some embodiments, the computing device 100 may have different processors, operating systems, and input devices consistent with the device. The Samsung GALAXY smartphones, e.g., operate under the control of Android operating system developed by Google, Inc. GALAXY smartphones receive input via a touch interface.

In some embodiments, the computing device 100 is a gaming system. For example, the computer system 100 may comprise a PLAYSTATION 3, or PERSONAL PLAYSTATION PORTABLE (PSP), or a PLAYSTATION VITA device manufactured by the Sony Corporation of Tokyo, Japan, a NINTENDO DS, NINTENDO 3DS, NINTENDO WII, or a NINTENDO WII U device manufactured by Nintendo Co., Ltd., of Kyoto, Japan, an XBOX 360 device manufactured by the Microsoft Corporation of Redmond, Washington.

In some embodiments, the computing device 100 is a digital audio player such as the Apple IPOD, IPOD Touch, and IPOD NANO lines of devices, manufactured by Apple Computer of Cupertino, California. Some digital audio players may have other functionality, including, e.g., a gaming system or any functionality made available by an application from a digital application distribution platform. For example, the IPOD Touch may access the Apple App Store. In some embodiments, the computing device 100 is a portable media player or digital audio player supporting file formats including, but not limited to, MP3, WAV, M4A/AAC, WMA Protected AAC, AIFF, Audible audiobook, Apple Lossless audio file formats and .mov, .m4v, and .mp4 MPEG-4 (H.264/MPEG-4 AVC) video file formats.

In some embodiments, the computing device 100 is a tablet e.g. the IPAD line of devices by Apple; GALAXY TAB family of devices by Samsung; or KINDLE FIRE, by Amazon.com, Inc. of Seattle, Washington. In other embodiments, the computing device 100 is a eBook reader, e.g. the KINDLE family of devices by Amazon.com, or NOOK family of devices by Barnes & Noble, Inc. of New York City, New York.

In some embodiments, the communications device 102 includes a combination of devices, e.g. a smartphone combined with a digital audio player or portable media player. For example, one of these embodiments is a smartphone, e.g. the IPHONE family of smartphones manufactured by Apple, Inc.; a Samsung GALAXY family of smartphones manufactured by Samsung, Inc.; or a Motorola DROID family of smartphones. In yet another embodiment, the communications device 102 is a laptop or desktop computer equipped with a web browser and a microphone and speaker system, e.g. a telephony headset. In these embodiments, the communications devices 102 are web-enabled and can receive and initiate phone calls. In some embodiments, a laptop or desktop computer is also equipped with a webcam or other video capture device that enables video chat and video call.

In some embodiments, the status of one or more machines 102, 106 in the network 104 is monitored, generally as part of network management. In one of these embodiments, the status of a machine may include an identification of load information (e.g., the number of processes on the machine, central processing unit (CPU) and memory utilization), of port information (e.g., the number of available communication ports and the port addresses), or of session status (e.g., the duration and type of processes, and whether a process is active or idle). In another of these embodiments, this information may be identified by a plurality of metrics, and the plurality of metrics can be applied at least in part towards decisions in load distribution, network traffic management, and network failure recovery as well as any aspects of operations of the present solution described herein. Aspects of the operating environments and components described above will become apparent in the context of the systems and methods disclosed herein.

### B. Solution Stacks Identification

The present disclosure relates to systems and methods for identifying and monitoring solution stacks in a computer environment, such as the computing and network environment 10. A solution stack as used herein can refer to a bundle of software components and/or hardware subsystems or devices associated with a corresponding solution (also referred to in some implementations as information technology (IT) solution). A solution can refer to a function to be performed, for example, within the computer environment. The solution can be a software solution (e.g., a function performed through software executing on one or more computing devices), a hardware-based solution or a combination thereof. In general, a solution stack can be viewed as the set of assets configured to provide a reliable and fully functioning corresponding solution. For instance, the solution stack can form a complete system or platform to provide the reliable and fully functioning corresponding solution. Solution stacks and corresponding solutions may be used, or referred to, herein interchangeably. Illustrative examples of solutions can include an enterprise email service such as MICRSOFT EXCHANGE, an instant messaging and/or a voice-over-IP (VOIP) service such as SKYPE for Business, a teleconferencing service, a document management service, a computerized accounting service, an electric power solution, for example, for a given enterprise office or site, a storage solution, a virtualization solution, a network solution, or a combination thereof, among others.

The software bundle for a corresponding solution can be sold as a single software package. A vendor may either sell only the software package or sell both the software package and the corresponding supporting and/or hosting hardware for a given solution. However, even when selling only the software package, the vendor may still provide specifications of the hardware infrastructure, such as the type and number of hardware assets, and/or the corresponding architecture (e.g., how the hardware assets are interconnected) specified or preferred to run and support the software bundle. The vendor may provide specified or preferred configuration settings or other settings for various assets of the solution stack, including hardware and/or software assets, or for the solution stack as a whole. As used herein, an asset can be a software asset, a hardware asset or a combination of both. A software asset can include, for example, a software subsystem, a software server, a software code, a software component, or a script, among others. A hardware asset can include a hardware server, a client computing device, a storage device, a network device, a power device, a microprocessor, a microchip, a printed circuit board, a controller, a circuitry, a sensor, a camera, or other electric, electronic or electromechanical device, among others.

When a solution stack for a corresponding solution is built or integrated, for example, within a computer environment such as an enterprise computer network, the integration or building of the solution stack may not conform with specifications or requirements provided by the corresponding vendor. For example, the owner of the computer environment or the respective IT personnel may use a different hardware infrastructure, (e.g., in terms of the number, types or capabilities of computer servers or other devices used), different architecture (e.g., in terms of inter-connections between various assets) and/or different settings (e.g., configuration settings) than those specified or recommended by the vendor. Also, even if the solution stack is initially built, installed or integrated in compliance with the vendor's specifications or recommendations, intentional or inadvertent modifications of the solution stack may occur after the installation or deployment of the solution stack. For example, an IT administrator may intentionally or inadvertently add, remove or omit an asset of the solution stack, add, remove or omit a physical or logical connection between two or more assets in the solution stack, or change a configuration setting or other setting for one or more assets of the solution stack, among others. Also, an asset or a subsystem (e.g., a firewall or a cybersecurity system among others) of the computer environment may automatically affect similar changes to the solution stack, for example, by quarantining an asset or modifying a setting parameter of an asset.

Changes or modifications to the solution stack made prior to, during or after deployment of the solution stack can negatively affect or jeopardize the functioning, performance, security, compliance, risk, and/or operational health, among others, of the corresponding solution. The changes or modifications to the solution stack can negatively affect or jeopardize the functioning, performance, security, compliance, risk, and/or operational health, among others, of another solution, another subsystem or another asset of the computer environment, or of the whole computer environment. For example, if the vendor specifications recommend or suggest hosting backend and frontend databases of a solution on separate servers, deploying or modifying the solution stack to host such databases on the same server can lead to a cybersecurity risk that can jeopardize the security, availability and/or credibility of data stored in the backend database. For example, an intrusion of the server can expose both the frontend and backend databases. Also, reducing, e.g., at the deployment phase or after deployment of the solution stack, the number of servers recommended for the solution can cause performance, operational, compliance and/or security issues associated with the solution stack or other components of the computer environment. For instance, using a smaller number of servers (e.g., smaller than a number of servers specified by the vendor) can result in higher than planned processing load on the deployed servers or in mitigated or nullified redundancy. Overloading the deployed servers can reduce the respective processing speed and/or increase the number or rate of dropped tasks, while mitigating or nullifying redundancy can increase the likelihood of total failure of the solution. As another example, deployments of or modifications to a solution stack that violate a requirement or specification of not assigning a separate externally facing Internet Protocol (IP) address and a separate internally facing IP address to the same server can result in creating a cybersecurity hole, which can result in a backdoor that facilitates bypassing a firewall of the computer environment or other cybersecurity system. Such violation can occur, for example, in a deployed SKYPE edge server. Another example problem may occur when a firewall configuration wrongly indicates that a server, or asset, of the solution is meant or intended to communicate internally. In such example, the firewall can block, lock down or quarantine the server (or asset) and prevent it from communicating with an external entity (e.g., outside the computer environment), which can bring the whole solution or one or more functions thereof down.

The changes or modifications to any solution stack can occur at any point of time during or after deployment. As such, identifying and/or monitoring deployed solution stacks can help diagnose and overcome or quickly address technical problems or risks associated with inadequate builds or configurations, e.g., compared to reference solution profiles or specifications, of the solution stack or related assets. Specifically, the ability to reconstruct a current state of a given solution stack can allow for detecting and addressing functional, performance, operational, compliance or security problems associated with the solution stack. The current state of the solution stack can include information indicative of the assets forming the solution stack, the configuration settings of the assets, the infrastructure interconnections between the assets, and/or the security-wise inter-relations between the assets, among others, at a current point of time. A SSIM system can compare the reconstructed current state to a reference or desired state of the solution stack, and can allow for correcting for, or eliminating, any discrepancies between both states whenever desired, for example, to avoid or address any problems related to such discrepancies. For example, the SSIM system can alert one or more users, e.g., system administrators, upon detecting that the solution stack is hosting frontend and backend databases on the same server in contradiction with vendor specification or other reference specification. When made aware of any inadequate build, deployment or configuration (e.g., compared to a reference specification) associated with the solution stack, a system administrator can take proper steps to fix the inadequate build, deployment or configuration, and therefore, address any related existing or potential functional, performance, operational, compliance or security problems, among other problems related to any discrepancy between the current state and the reference specification.

Identifying the assets, architecture and/or configuration of a deployed solution stack can allow for real-time or near real-time (e.g., iteratively every few minutes) monitoring of the performance health, the security health and/or the compliance to relevant regulations and/or rules, among other aspects of the solution or the corresponding solution stack. The performance health can be defined, for example, based on usage or availability of processing resources, memory or storage resources, network resources or power resources, among other resources. The security health can be defined based on, or indicative of, vulnerabilities, security holes, or security risks, among others issues. The compliance of the solution stack can include compliance to business or legal regulations and/or rules, among others. Also, monitoring of the performance health, the security health and/or the compliance to relevant regulations and/or rules can help identify any effects the deployed solution stack may have on other solution stacks, other subsystems or other assets of the computer environment. In addition, monitoring separate solutions stacks or relatively more important (e.g., from a business perspective or risk perspective) solution stacks can be more efficient, more reliable and more productive than monitoring the whole computer environment. Finally, identifying and/or monitoring separate solutions stacks can allow for relatively quick and efficient responses to cybersecurity threats or attacks, for example, compared to monitoring the whole computer environment.

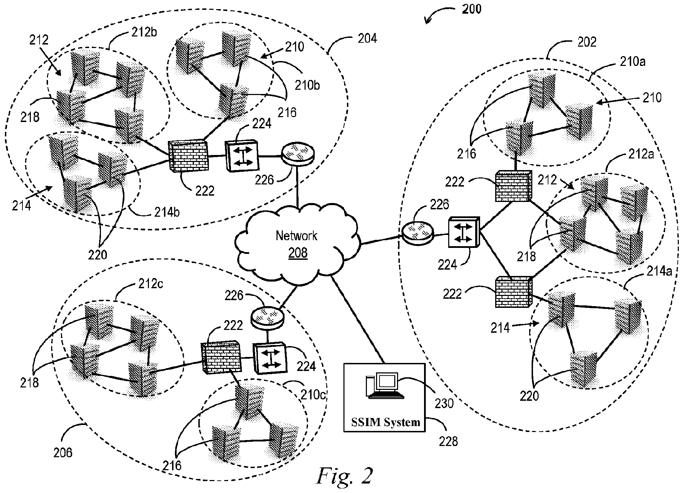

Referring to FIG. 2, an example computer environment 200 hosting a plurality of IT solutions is depicted. The computer environment 200 can be, or can include, an enterprise or corporate computer network, a communication network, a power grid system, a network of remotely monitored or controlled medical devices, or a combination thereof, among others. The communication network can include a cellular network, landline network, optical network, metropolitan area network (MAN), or wide area network (WAN), among other networks. The computer environment 200 can be distributed over, or can include, a plurality of sites 202-206, for example, associated with distinct geolocations. The sites 202, 204 and 206 can be communicatively coupled or connected to each other through a communication network 208. The communications network 208 can include a local-area network (LAN), e.g. Intranet, a metropolitan area network (MAN), a wide area network (WAN), a wireless network, a private network, a public network, the Internet, or a combination thereof. A site, e.g., 202, 204 or 206, can include or can be a local computer sub-environment or network associated, for example, with a corporate office or industrial factory or site. A site, e.g., 202, 204 or 206, can be associated with a data center, for example, hosting a portion of the computer environment deployed in the cloud.

The computer environment 200 can include a plurality of solution stacks 210, 212 and 214 integrated or deployed therein. Each solution stack can be associated with, e.g., configured to provide, a corresponding solution. Each of the solution stacks 210, 212 and 214 can be distributed over one or more of the sites 202, 204 and 206. For example, solution stack 210 can include sub-stacks 210a, 210b and 210c arranged at sites 202, 204 and 206, respectively. Solution stack 212 can include sub-stacks 212a, 212b and 212c arranged at sites 202, 204 and 206, respectively. Solution stack 214 can include sub-stacks 214a and 214b arranged at sites 202 and 204, respectively. For any of the solution stacks 210, 212 or 214, each of (or at least one of) the corresponding sub-stacks can represent a full solution stack. For example, the corresponding sub-stacks can be clones or copies of each other. In some implementations, the sub-stacks for any of the solution stacks 210, 212 or 214 can form a full solution stack in combination. Each solution stack 210, 212 or 214 can include a corresponding plurality of assets. For example, solution stack 210 can include a plurality of assets 216, solution stack 212 can include a plurality of assets 218, and solution stack 214 can include a plurality of assets 220. For each solution stack 210, 212 or 214, the corresponding assets can include hardware assets, software assets or a combination of both.

Each of the sites 202, 204 and 206 can include one or more firewalls 222, one or more switches 224, one or more routers 226, other computer or electronic devices (not shown in FIG. 2), or a combination thereof. The other computer or electronic devices may or may not be part of solution stacks 210, 212 and 214. Any of the solution stacks 210, 212 and 214, or an asset thereof, can be communicatively coupled to the one or more firewalls 222, the one or more switches 224 and/or the one or more routers 226. For example, at each site 202, 204 or 206 the corresponding firewall(s) 222 can monitor and control communications between a solution sub-stack in that site with other solution sub-stacks, other computer sub-systems and/or other assets in that site. The firewall 222 at a given site 202, 204 or 206 can monitor and control communications with entities outside the site. In some implementations, the firewall 22, the switches 224 and/or the routers 226 can be part of the solution stacks 210, 212 and/or 214.

Distinct solution stacks or distinct solution sub-stacks, e.g., associated with distinct solutions, may share one or more assets. For example, a firewall 222 can be part of two distinct solution stacks or distinct solution sub-stacks. While FIG. 2 provides an example illustration of solution stacks, e.g., solution stacks 210, 212 and 214, integrated in a computer environment 200, such illustration is not limiting, for example, with respect to the number of solution stacks in computer environment 200, the distribution of a solution stack among one or more sites, the number of assets in each solution stack, the interconnection between assets within a given solution stack, the connections between any solution stack and other assets of the computer environment 200, among others.

A solution, or a corresponding solution stack, can include one or more assets, one or more sub-solutions, or a combination thereof. A sub-solution can be viewed as a relatively small solution embedded within another larger solution. A sub-solution can include corresponding assets, but may not include other solutions or sub-solutions. A solution can include only assets, only sub-solutions, or a combination of assets and sub-solutions. For example, one or more domain controllers can form a sub-solution for handling security authentication requests. SKYPE for Business is an example of a solution that includes a security authentication sub-solution, e.g., one or more domain controllers, and one or more other assets.

A super solution can include a plurality of solutions. In some implementations, a super solution can be a group of solutions. Two or more solutions of the group of solutions can share one or more assets. An example of a super solution can be a unified communication system including the solutions SKYPE for Business, MICROSOFT EXCHANGE, and a teleconferencing system can be viewed as a super solution. A super solution can be monitored or assessed as one entity. In some implementations, the computer environment 200 can include one or more super solutions, one or more solutions, one or more sub-solutions or a combination thereof.

The solution stacks 210, 212 and/or 214 can be defined within one layer or level, or across a plurality of layers or levels. For instance, the solution stacks 210, 212 and/or 214 can be defined at the servers' level, at the virtualization layer, at the network layer or level, or at the application layer, among others. For example, a solution that is implemented using virtual machines can be defined in terms of such virtual machines and corresponding virtualization host(s). In some implementations, the solution stacks 210, 212 and/or 214 can be defined across all layers or levels, for example, from the application layer all the way down to the electrical or physical layer. In such implementations, the solution stacks 210, 212 and/or 214 can include a combination of software assets, computing devices, network devices, and power supply devices, among others assets associated with various layers or levels. When considering all layers or levels, the solution stack can be defined as a complete set of software and/or hardware assets involved in performing the corresponding solution or the function(s) associated with the solution. Any pair of the solution stacks 210, 212 and 214 can be mutually disjoint or can have one or more assets in common. For instance, one or more solution stacks can share a firewall, a network device, a storage device, a virtualization host, a power supply system or a combination thereof, among others.

The computer environment 200 can include or can be communicatively coupled to a solution stack identification and monitoring (SSIM) system 228. The SSIM system 228 can include one or more computing devices 230 for executing the SSIM software 120 described with respect to FIG. 1C. The one or more computing devices 230 can be similar to the computing device 100 of FIG. 1C. In some implementations, the one or more computing devices 230 of the SSIM system 228, or a subset thereof, can be arranged at one of the sites 202, 204 or 206. The SSIM system 228 can include a computing device 230 located at a remote location from all sites 202, 204 and 206. The SSIM system 228 can be configured to perform methods described in this disclosure.

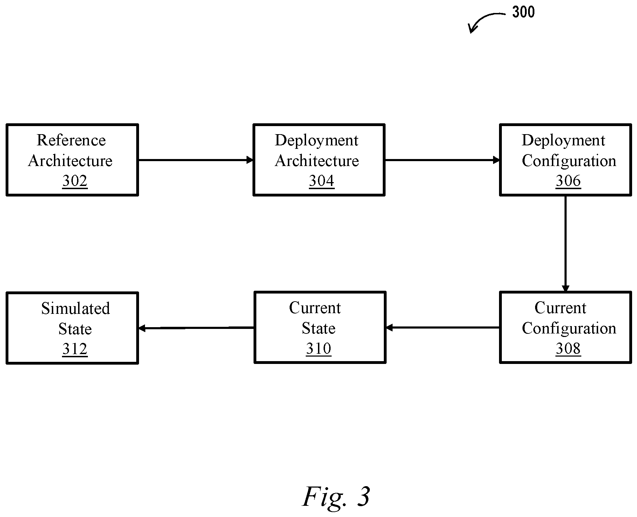

Referring to FIG. 3, a block diagram illustrating various phases, states or aspects 300 of a solution, or a respective solution stack, is shown. The various phases, states or aspects 300 can include a reference architecture 302, a deployment architecture 304, a deployment configuration 306, a current configuration 308, a current state 310, and/or a simulated state 312. These phases, states or aspects may not be all available for each solution. For instance, only a subset of these phases, states or aspects 300 can be available. The various phases, states or aspects 300 can be associated with distinct stages of a lifecycle of the solution or the respective solution stack.

The reference architecture 302 can represent a recommended or desired architecture, for example, provided or specified by a vendor of the solution or an architect of the solution. The reference architecture can specify, for example, the hardware and software assets to form the solution (or corresponding solution stack), the interconnections between various assets, the hardware host(s) for each software asset, or a combination thereof. The reference architecture 302 can specify, or can include, one or more configuration settings for one or more assets of the solution stack or other assets of the computer environment 200 in which the solution stack is to be integrated. The reference architecture 302 may specify one or more requirements or parameters related to, for example, high availability, disaster recovery, business continuity, operational recovery, resiliency, or a combination thereof, among others. Information indicative of, or associated with, the reference architecture 302 can be provided as input to the SSIM system 228, or obtained from a database or asset of the computer environment 200.

The deployment architecture 304 can represent an architecture of the solution stack as initially deployed or integrated in the computer environment 200. The deployment architecture 304 may or may not be in conformity with the reference architecture 302. For example, as discussed above, the solution or solution stack may be deployed with less or more hardware assets, or with assets having different capabilities than those specified in the reference architecture 302. According to another example, the solution stack may be deployed with interconnections between various assets, or respective ports, that are different than the interconnections specified in the reference architecture 302. According to yet another example, one or more software assets, e.g., including databases, may be hosted on hardware assets different than those specified in the reference architecture 302. Information indicative of, or associated with, the deployment architecture 304 can be provided as input to the SSIM system 228, or obtained from a database or asset of the computer environment 200.

The deployment configuration 306 can include, or can be indicative of, configuration settings for one or more assets of the solution stack that are adopted at the time when the solution stack is initially deployed within the computer environment 200. Similar to the deployment architecture 304, the deployment configuration 306 may not conform with configuration settings specified in the reference architecture 302. Also, the deployment configuration 306 may or may not conform, for example, with security specifications, compliance specifications, or other specifications associated with the solution stack, or the computer environment 200. The security specifications, compliance specification, or other specifications can be listed or described as part of the reference architecture 302 or otherwise provided by a vendor of the solution or through an online resource or database. Discrepancies between deployment configuration 306 and other settings or specifications, e.g., related to the solution stack or the computer environment 200, can occur as a matter of choice or by mistake on the part of the person deploying the solution or corresponding solution stack. The SSIM system 228 can obtain information indicative of, or associated with, the deployment configuration 306, for example, from configuration logs associated with the solution stack or assets thereof, from a database or other data source associated with the solution stack or the computer environment 200, or as input data, among others.

The current configuration 308 can include, or can be indicative of, the configuration settings of the solution stack or one or more assets thereof at a current time instant post deployment. After deployment of the solution or solution stack, a user or a subsystem of the computer environment, such as firewall 222 or a computer server, among others, can modify the configuration settings adopted at the time of deployment. For example, a system administrator may intentionally or inadvertently modify one or more configuration settings associated with one or more assets of the solution stack. The subsystem of the computer environment 200 may automatically modify one or more configuration settings associated with one or more assets of the solution stack, for example, due to conflict with other configuration settings, such as security or compliance settings, associated with the computer environment 200. The SSIM system 228 can obtain information indicative of, or associated with, the current configuration 308, for example, from one or more assets of the solution stack, or configuration logs associated with the solution stack or the computer environment 200, among others.

The current state 310 can represent a current situation of the solution or the corresponding solution stack from one or more perspectives. For instance, the current state 310 can include information related to, or indicative of, a current architecture of the solution stack. The current architecture can include assets currently forming the solution stack and corresponding interconnections. The current architecture may be similar to, or different from the deployment architecture 304 and/or the reference architecture 302. The current state 310 can include information related to, or indicative of, the current configuration 308. In some implementations, the current configuration 308 can be part of the current state 310. The current state 310 can include information related to, or indicative of, a current operational state. The current operational state can include, for example, information or parameters indicative of which assets are down, processing performance of one or more assets, networking performance of one or more assets, percentage usage of resources for one or more assets, redundancies, disaster recovery, operational recovery, high availability, operational recovery or a combination thereof, among others. The current state 310 can include information related, or indicative of, a current security state. The current security state can include, for example, information or parameters indicative of current vulnerabilities for one or more assets, resiliency, current security risks at the asset level or the solution stack level, or a combination thereof, among others.

The SSIM system 228 can obtain information indicative of, or associated with, the current state 310 from one or more data sources, such as vulnerability scanners, assets of the solution stack or the computer environment 200, logs of the solution stack or the computer environment 200, databases or online information resources (e.g., websites, webpages or client application pages) of vendors of the solution or assets thereof, or a combination thereof. For example, the SSIM system 220 can profile, or cause another system or device to profile, of one or more assets of the solution stack or of the computer environment 200. The SSIM system 228 can compare and/or merge data received from a plurality of data sources. For example, the SSIM system 228 can compare data received from various vulnerability scanners with respect to one or more parameters of the solution stack or an asset thereof. The SSIM system 228 can profile, or cause the profiling of, one or more assets, for example, to resolve a conflict or inconsistency in data from various vulnerability scanner or other data sources.

The SSIM system 228 can analyze information received from the data sources, e.g., a combination of asset communication activity information, communication or configuration logs, physical or logical interconnection data, Internet protocol (IP) addresses, processing power usage data, memory or storage usage data, network resources usage data, and/or power resources usage data, to deduce additional parameters of the current state 210. For example, the SSIM system 228 can use communication activity information, communication logs, and/or security zone(s) for one or more assets of the solution stack to deduce a parameter value indicative of whether or not the solution stack complies with a security specification (or requirement). According to another example, the SSIM system 228 can use information indicative of current architecture and/or descriptions of one or more assets of the solution stack to deduce a parameter value indicative of redundancy or of failure risk for the solution stack.

The simulated state 312 can represent a state of a simulated scenario of the solution or the solution stack. The SSIM system 228 can simulate, or cause simulation of, one or more hypothetical versions of the solution stack, for example, in terms of the architecture, configuration or other aspects of the solution stack. The SSIM system 228 can define or construct a modified or hypothetical version of the solution stack that is, for example, different from the current state 310 of the solution stack with respect to one or more aspects or features, and simulate the modified or hypothetical version of the solution stack to assess effect of the difference(s) on various assets or subsystems associated with the solution stack or the computer environment 200. For example, if the current state 310 indicates a current problem, e.g., related to the current architecture, current configuration 308, or other aspects of the solution stack, the SSIM system 228 or a component thereof can simulate a plurality of modifications of the solution stack that can be pursued to fix the problem. The simulations can provide estimates of the effects of each of the possible solution modifications on the solution stack, the computer environment 200, or components thereof. The use of simulations can help avoid or mitigate potential chaotic modifications, and pursue a relatively smooth modification path or scenario. The SSIM system 228 can generate a plurality of simulation responses associated with a plurality of potential modifications. Each potential modification to the solution stack can be simulated at one or more layers, e.g., the network layer, storage layer, virtualization layer, electrical layer, or application layer, among others. The SSIM system 228 can provide the plurality of simulation responses for display to a user, and the user can select one of the potential modifications to be implemented based on the simulation responses. The SSIM system 228 may recommend one of the potential modifications to be implemented based on the simulation responses.

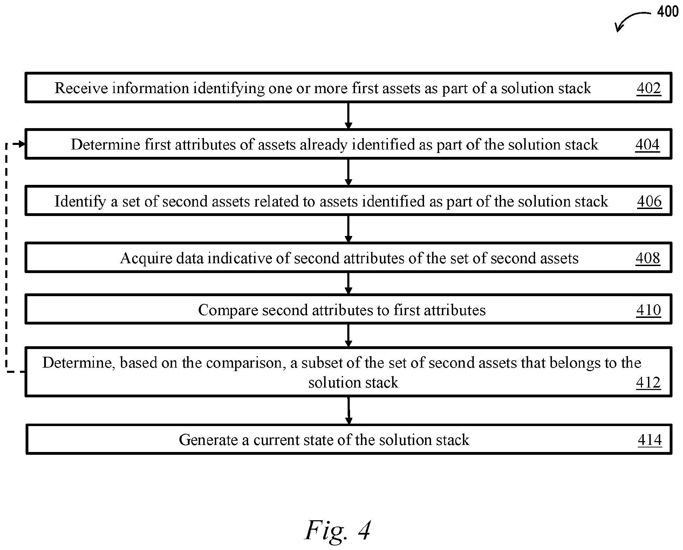

Referring to FIG. 4, a flowchart illustrating a method 400 of identifying deployed solution stacks according to example embodiments is shown. The method 400 can include receiving information identifying one or more first assets as belonging to a solution stack integrated or deployed within a computer environment (BLOCK 402). The method 400 can include determining, using first data of the computer environment acquired from one or more first data sources first attributes of the one or more first assets (BLOCK 404). The method 400 can include identifying, using at least one of the first data or the first attributes, a set of second assets related to the one or more first assets or assets already identified as belonging to the solution stack (BLOCK 406). The method 400 can include acquiring, from one or more second data sources, second data of the computer environment indicative of second attributes of the set of second assets (BLOCK 408), and comparing the second attributes to the first attributes (BLOCK 410). The method 400 can include identifying, based on the comparison of the second attributes to the first attributes, a subset of the set of second assets as belonging to the solution stack (BLOCK 412). The method 400 can include generating a current state of the solution stack based on assets identified to be part of the solution stack and/or respective attributes (BLOCK 414).

The method 400 can include the SSIM system 228 receiving information indicative of one or more first assets of the solution stack (BLOCK 402). The SSIM system 228 can receive the information, for example, as input data or from an asset of the computer environment 200. The information can include, for example, a reference architecture of the solution stack, a deployment architecture of the solution stack, deployment or current configurations of one or more assets (e.g., the one or more first assets) of the solution stack, or a combination thereof among others. The information can identify the one or more first assets as belonging to the solution stack. The information can include, e.g., for each of the one or more first assets, the respective asset name, asset description, asset capabilities or resources, asset configuration settings, asset role within the solution stack, asset IP address, or a combination thereof among others. The information can include indications of physical and/or logical interconnectivities between the one or more first assets of the solution stack. The information can be associated with a subset of assets of the solution stack, while there may be uncertainty about the current state 312 of the solution stack. The method 400 allows for using the information obtained or received by the SSIM system 228 to determine, or construct a representation of, the current state of the solution stack.

The method 400 can include the SSIM system 228 determining, using first data of the computer environment acquired from one or more first data sources first attributes of the one or more first assets (BLOCK 404). The SSIM system 228 can acquire the first data from the one or more first data sources. The first data sources can include at least one of the one or more first assets, other assets of the computer environment 200, one or more vulnerability scanners, other computer system scanners, or a combination thereof among others. For example, the SSIM system 228 can profile, or can cause another device or system to profile, at least one of the one or more first assets (or other assets of the computer environment 200) to obtain at least part of the first data. The other assets of the computer environment 200 can include assets that may hold information about the one or more first assets, such as a communication log database, a configuration log database, a database storing statistical or historical network data, a hypervisor (e.g., VMware workstation), or a combination thereof, among others. The SSIM system 228 can cause one or more vulnerability scanners, or other computer system scanners, to scan the computer environment 200 or a portion thereof. The SSIM system 228 can access already available vulnerability scan data.

The SSIM system 228 can request connectivity tables, communication logs or a combination thereof, for example, when profiling the one or more first assets of the solution stack, to identify the second assets that are related to the one or more first assets. For example, the second assets can include assets that are connected to, have communicated with, shared or accessed the same data as, or shared the same storage or virtualization host as at least one of the one or more first assets. The SSIM system 228 can request respective asset descriptions, respective configuration logs, or information thereof, for example, when profiling the one or more first assets. The asset description or the configuration logs can include, for example, asset name, asset type, asset IP address, an indication of an asset role or purpose, whether the asset belongs to any solution or subsystem, the operating system (OS), asset software (e.g., software running or implemented in the asset), memory resources, processing resources, network zone, security zone, NetBios information, storage information, dependency information, power source information, network information, or a combination thereof, among others. Vulnerability scanners can provide information indicative of asset names, asset types, asset resources, asset IP addresses, asset OSs, software and/or applications associated with each asset, vulnerabilities associated with each, or a combination thereof, among others. The SSIM system 228 can receive or access data associated with a plurality of vulnerability scanners. The SSIM system 228 can compare, e.g., for a given asset or each asset of the one or more first assets, corresponding data received from various data sources and merge the data in a data structure such as a table.

For each asset of the one or more first assets, the first attributes can include variables across one or more layers or levels including OS variables, software variables, storage variables, virtualization variables, network variables, access log variables, data variables, security variables, power supply variables, or a combination thereof, among others. For example, the first attributes for each first asset can include an asset name, asset type, OS type, asset version, NetBios information, or asset software (or application) parameters, such as software name, software version, respective application program interfaces (APIs) and/or installation date. The first attributes, for each first asset, can include respective memory resources, historical memory usage, processing power resources, processing power usages, storage drive, virtualization host, virtual machines, IP address, network zone, physical connections, or logical connections, among others. The first attributes, for each first asset, can include historical communications, login or access information (e.g., entities or accounts that logged in or accessed the asset), ownership information, administrator information, asset files, deployment date, configuration settings, security zone, vulnerabilities, electric power supply devices or parameters, or a combination thereof, among others. The first attributes, for each first asset, can include historical or statistical network data for one or more communication ports associated with the first asset, data or a database accessed (or frequently accessed) by the first asset, a range of IP addresses associated with the one or more first assets, or a combination thereof among others. For each first asset, a subset of these attributes can be applicable. In some implementations, a predefined subset of applicable variables or attributes can be applicable to each one of the one or more first assets or a separate subset of attributes can be defined for first asset.

The method 400 can include the SSIM system 228 identifying, using at least one of the first data or the first attributes, a set of second assets related to the one or more first assets or assets already identified as belonging to the solution stack (BLOCK 406). The SSIM system 228 can use the first data acquired from the one or more first data sources or the first attributes of assets already identified as part of the solution stack to identify one or more second assets related to assets already identified as belonging to the solution stack. For example, the SSIM system 228 can identify a second asset as a storage device and/or a virtualization host hosting at least one asset of the assets already identified as part of the solution stack, based on respective asset description or configuration log(s). The SSIM system 228 can identify one or more second assets as network devices or other assets of the computer environment 200 connected to, or in communication with, at least one asset of the assets already identified as part of the solution stack, using data from respective connectivity tables or communication logs. The SSIM system 228 can identify one or more second assets as electrical power devices or systems supplying electric current to the assets already identified as part of the solution stack. The SSIM system 228 can identify one or more second devices accessing similar data or similar databases or sharing the same storage device, the same virtualization host, or the same network router or modem, among others, as at least one of the assets already identified as part of the solution stack.

The method 400 can include the SSIM system 228 acquiring, from one or more second data sources, second data of the computer environment indicative of second attributes of the set of second assets (BLOCK 408), and comparing, for each second asset, the respective second attributes to the first attributes (BLOCK 410). The SSIM system 228 can acquire the data indicative of the second attributes as discussed above with regard to BLOCK 404. Specifically, the SSIM system 228 can receive or obtain the data from a second plurality of data sources including the set of second assets, other assets of the computer environment 200, vulnerability scanners, other computer system scanners, or a combination thereof, among others. For each asset of the second assets, the second attributes, similar to the first attributes, can include variables across one or more layers or levels including OS variables, software variables, storage variables, virtualization variables, network variables, access log variables, data variables, security variables, power supply variables, or a combination thereof, among others. Also, the first and second attributes can depend on the layers or levels across which the solution stack is defined. For instance, the solution stack can be defined across all, or a subset of, existing layers and/or levels. The second attributes can include a subset of the example attributes recited above with regard to BLOCK 404.

The SSIM system 228 can compare, or use, the first and second attributes (BLOCK 410) to determine any matching physical and/or logical interconnections between the first and second assets, physical and/or logical interdependencies between the first and second assets, matching features or attributes of the first and second assets, or a combination thereof, among others. In assessing physical interconnections, the SSIM system 228 can use data from connectivity tables or network statistics data from one or more network devices or from a network statistics database. The data from connectivity tables can be indicative of physical connections between various assets, whereas the network statistics data can include, for example, transmission or reception data rate or short-term packet loss, among others, for each communication port associated with a respective hardware asset. The SSIM system 228 can determine physical connections between pairs of ports associated with distinct assets by matching the historical or statistical network data for various pairs of ports. For instance, for a pair of connected communication ports, the corresponding historical or statistical network data are expected to match one-another at least to some degree since data transmitted by one port is received by the other port. The SSIM system 228 can analyze and match or group the historical or statistical network data for various ports into pairs of sets of data reflecting pairs of connected ports. The SSIM system 228 can match or group the historical or statistical network data for various ports into pairs of data sets using, for example, mean square difference between each pair of data sets associated with a corresponding pair of ports. The SSIM system 228 can match or group the historical or statistical network data for various ports into pairs of data sets, for example, by comparing predefined signatures of various historical or statistical network data sets. Each historical or statistical network data set can be associated with a corresponding communication port. In determining logical interconnections, the SSIM system 228 can compare or use data from communication tables or logs to identify one or more assets among the set of second assets that have been communicating with the one or more first assets.

Examples of physical interdependencies can include relationships between hosted assets and hosting storages, or power supply devices and power fed devices, or computing devices and network devices such as switches 224 and routers 226, among others. Examples of physical interdependencies can include relationships between virtual machines and virtualization hosts, computing devices and firewall 222, computing devices and domain controllers, or computing devices and databases storing data used by the computing devices, among others. The logical dependencies can involve scenarios where one asset depends on a service or data provided/stored by another asset. The SSIM system 228 can use the first and second attributes, or data collected for the first and second assets at BLOCKs 404 and 408, to determine physical and/or logical dependencies between the one or more first assets and the set of second assets. The SSIM system 228 can identify first attributes that match corresponding second attributes, when comparing the first and second attributes.

The method 400 can include identifying, based on the comparison at BLOCK 410, a subset of the set of second assets as belonging to the solution stack (BLOCK 412). In particular, the SSIM system 228 can use the determined physical connections, logical connections, physical dependencies, logical dependencies or matched features or attributes between the assets already identified as belonging to the solution stack and the subset of second assets to identify assets among the set of second assets that are part of the solution stack. The SSIM system 228 can employ a weighted score for various attributes compared at BLOCK 410. For example, each attribute can have a separate weight or coefficient that can be multiplied by 1 if there is a match between the corresponding first and second attributes, or multiplied by zero if no match. For instance, the SSIM system 228 can compute, for each second asset, respective individual scores for the determined physical connections, logical connections, physical dependencies, logical dependencies and/or matching attributes with corresponding first attributes, and sum the individual scores into a weighted score. The weighted score can represent a score (or probability) of the second asset being in the solution stack. The SSIM system 228 can compare the weighted score to a predefined threshold value of to identify whether the second asset belongs to the solution stack. In some implementations, the SSIM system 228 can use predefined decision rules to identify assets among the set of second assets that are part of the solution stack. In general, the more connections, dependencies or matching attributes a second asset has with the assets already identified as being part of the solution stack, the more likely it belongs to the solution stack.

The SSIM system 228 can update the group of assets (e.g., the one or more first assets) as being part of the solution stack to further include second assets identified to be part of the solution stack. The SSIM system 228 can repeat steps 404 through 412 for the updated group assets identified as belonging to the solution stack to identify other assets, if any, that belong to the solution stack. The SSIM system 228 can repeat steps 404 through 412 until no further second assets are found (at BLOCK 412) to belong to the solution stack or until a predefined criteria (e.g., number of assets in the solution stack) is met. At each cycle of the steps 404 through 412, the SSIM system 228 can flag assets processed but found not to be part of the solution stack. The flagging can help avoid re-processing the same assets repeatedly. The SSIM system 228 can re-process the flagged assets at a final cycle of the steps 404 through 412 as an extra precaution step not to miss any assets of the solution stack.

The method 400 can include the SSIM system 228 generating, using the group of assets identified to be part of the solution stack and corresponding attributes, a current state of the solution stack (BLOCK 414). The current state of the solution stack can define a complete set of assets forming the solution stack. The respective attributes can be identified at steps 404 and 408. The current state of the solution stack can include all assets forming the solution stack, interconnections between such assets, configurations of the assets and/or other attributes/characteristics of the assets or the solution stack as a whole. The SSIM system 228 can generate a current architectural state of the solution stack. The SSIM system 228 can generate a current configuration state of the solution stack. The SSIM system 228 can interrogate various assets identified to be part of the solution stack for respective configuration settings to generate a current configuration state of the solution stack.

The SSIM system 228 can generate or reconstruct a visual representation of the current architecture of the solution stack, and provide the visual representation for display on a display device. The SSIM system 228 can provide representations of various aspects, e.g., architecture, configuration, security, compliance, resources usage or stress, among others of the solution stack for display on the display device.

It should be appreciated that the assets identified or determined to be part of the solution stack can include additional assets or can have missing assets compared to the one or more first assets initially specified in the information obtained at step 402. Also, physical or logical connections between the assets of the solution stack, identified by the SSIM system 228, can be different than connectivity information provided in the information obtained at step 402. The current configuration state of the solution stack or assets thereof determined by the SSIM system can be different from the configuration information associated with the one or more first assets obtained at step 402.

The method 400 can include the SSIM system 228 comparing the current architectural and/or configuration state of the solution stack to the received information associated with the one or more first assets. The SSIM system 228 can compare various features or attributes of the current architectural and/or configuration state of the solution stack reconstructed at step 414 to corresponding features or attributes provided in the information obtained or received at step 402 to identify any potential discrepancies. The compared features or attributes can include, for example, the number of assets, type of assets, assets' capabilities (e.g., in terms of processing power, storage capacity, bandwidth, electrical properties, number and capacity of respective communication ports, among others), interconnections between assets, asset configurations, or a combination thereof, among others.

The method 400 can include the SSIM system determining whether a discrepancy exists between the current architectural and/or configuration state of the solution stack and the received information associated with one or more first assets, and if a discrepancy is detected, providing information indicative of the discrepancy for display on a display device. Based on the comparison, the SSIM system 228 can determine whether there is any discrepancy or difference between the features or attributes of the reconstructed current state of the solution stack and corresponding features or attributes provided in the received information at step 402 associated with the one or more first assets. If a discrepancy is detected, the SSIM system 228 can provide information indicative of such discrepancy for display to a user of the SSIM system 228 or of a client device communicatively coupled to the SSIM system 228. For instance, if a discrepancy is detected between a reference, or deployment architecture provided at step 402 and the reconstructed current architecture, the SSIM system 228 can provide visual representations of both architectures for display on a display device.

The SSIM system 228 can simulate, or cause simulation, of one or more hypothetical states, e.g., modified versions of the current state, of the solution stack as discussed above with regard to FIG. 3. For example, the SSIM system 228 can simulate, or cause simulation, of one or more hypothetical states of the solution stack to diagnose a problem or to explore ways of fixing or addressing a detected problem or discrepancy.

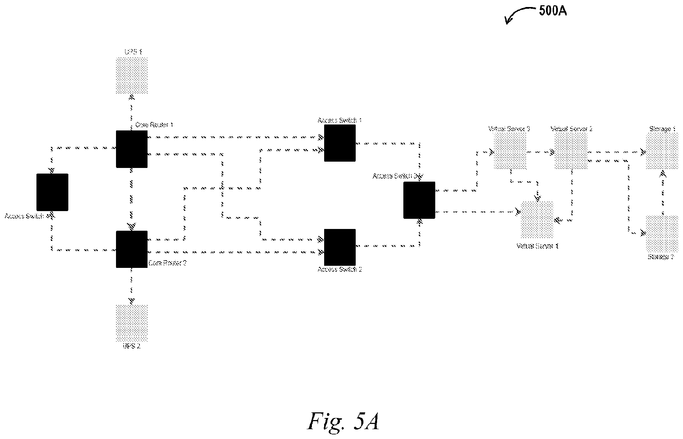

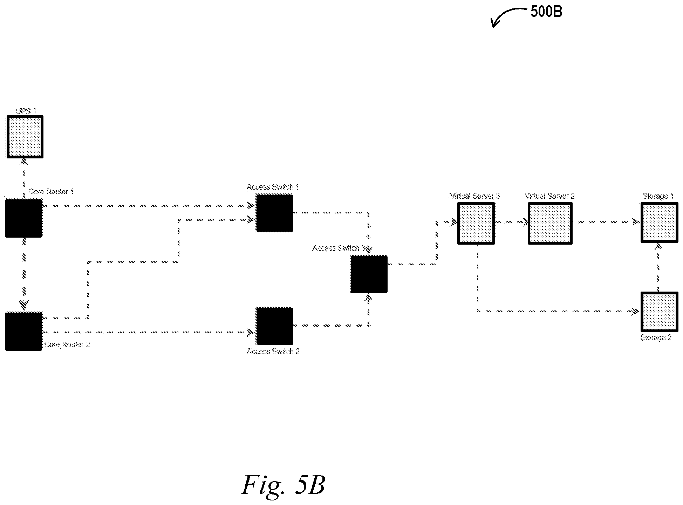

Referring to FIGS. 5A and 5B, block diagrams illustrating example reference and reconstructed architectures of a SKYPE for Business solution within a given geographical location (e.g., Boston) are shown. The architecture 500A in FIG. 5A represents the reference solution architecture, while the architecture 500B in FIG. 5B represents the current solution architecture reconstructed by the SSIM system. Comparing both architectures, one can see that the "Access Switch 4," the "UPS 2" and the "Virtual Server 1" are present in the reference solution architecture 500A in FIG. 5A but are missing in the reconstructed current solution architecture 500B of FIG. 5B. As used herein, USP refers to un-interrupted power supply or an interrupted power source, which is an electrical apparatus that provides emergency power to a load when the input (or main) power source fails. Displaying both architectures, or representations thereof, can allow a user to become aware of the discrepancies. For configuration discrepancies, the SSIM system may display received and reconstructed configuration settings for a given asset, sub-solution or solution next to each other. The SSIM system 228 may highlight or emphasize specific configuration settings (or settings' items) associated with the discrepancy.

The SSIM system 228 can provide various two-dimensional (2D) or three-dimensional (3D) representations of the current solution architecture for display on a display device. The 2D and/or 3D representations can illustrate filtered versions of the reconstructed current solution architecture. For example, the 2D and/or 3D representations can depict the current solution architecture per layer, per asset vendor, per geographical area or a combination thereof, among others.

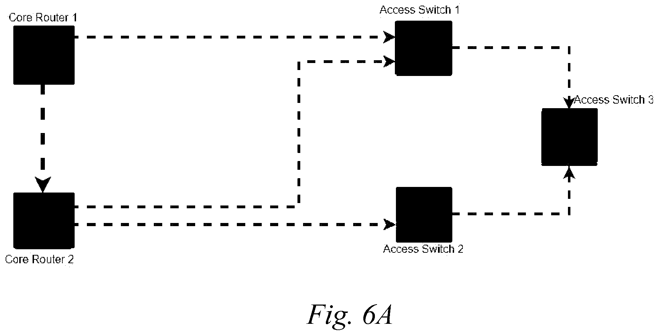

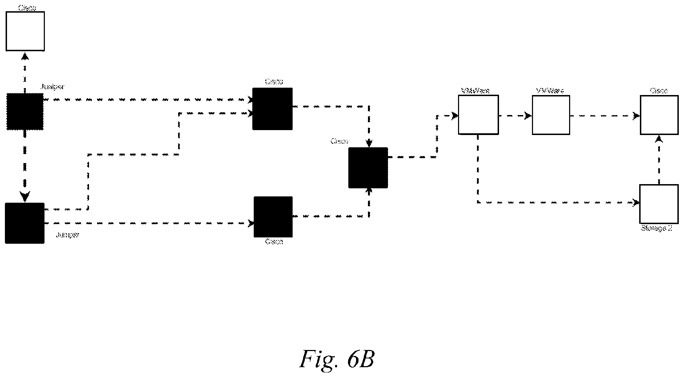

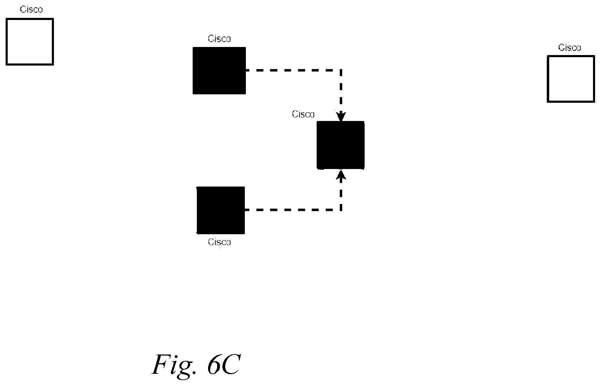

Referring to FIGS. 6A-6C, block diagrams illustrating 2D representations of various versions of the reconstructed architecture in FIG. 5B are shown. FIG. 6A shows the current network layer architecture of the SKYPE for Business solution in the Boston area. In other words, the 2D representation in FIG. 6A can be viewed as a filtered version (e.g., the network layer) of the current architecture of the SKYPE for Business solution in the Boston area shown in FIG. 5B. FIG. 6B shows the full current architecture of the SKYPE for Business solution in the Boston area as in FIG. 5B with each asset annotated with the corresponding vendor. FIG. 6C shows the assets of the current architecture of the SKYPE for Business solution in the Boston area that are provided by a specific vendor (e.g., CISCO).

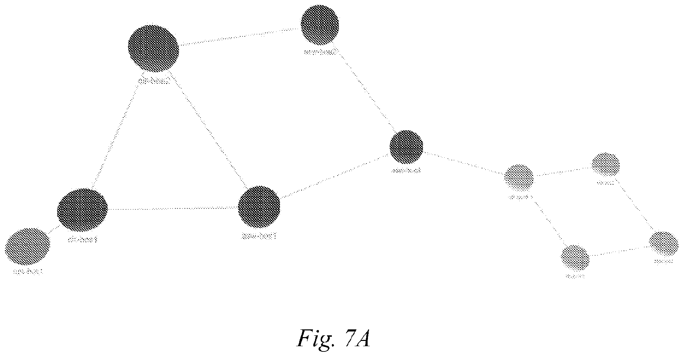

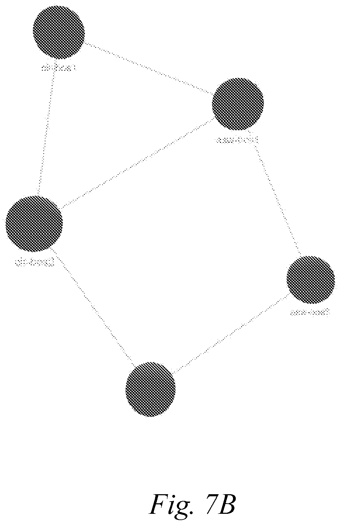

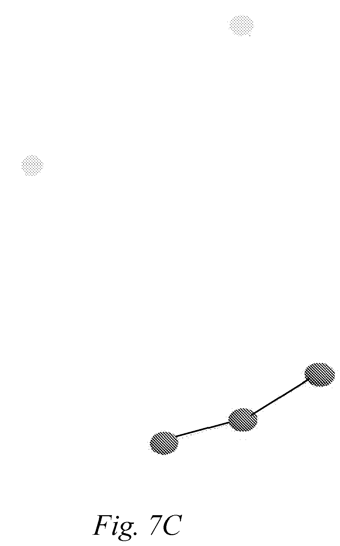

Referring to FIGS. 7A-7C, interactive 3D representations of the current architecture of the SKYPE for Business solution in the Boston area corresponding respectively to the 2D representations in FIGS. 5B, 6A and 6C are shown. A user of the SSIM system 228 can rotate the displayed 3D representations, for example, to get different views of the architecture from different angles. As such, a user can identify single points of failure, especially where the displayed architecture is condensed (e.g., having a relatively large number of assets and/or a large number of interconnections). A single point of failure is a node (or asset) that connects two subsets of the solution assets with no other link connecting the two subsets of the solution assets. A single point of failure can be defined within one layer across multiple layers.

The method 400 can include the SSIM system 228 repeating steps 402-412 for other solutions or corresponding solution stacks (BLOCK 414). Once the SSIM system 228 reconstructs the current architectural and/or configuration state of a first solution, the SSIM system 228 may do the same for a second solution. The SSIM system 228 may generate the current architectural and/or configuration states for all, or a selected subset of, the solutions deployed in the computer environment 200. The SSIM system 228 may generate the current architectural and/or configuration states for various deployed solutions sequentially or in parallel.

### C. Solution Stack Monitoring

The SSIM system 228 can monitor a solution stack to assess operational health and/or security health of the solution and/or assets thereof in real-time or near real-time (e.g., periodically every predefined time interval). The SSIM system 228 may assess the operational health and/or security health of the solution responsive to an assessment request received, for example, from a user of the SSIM system 228. Once the current architecture of the solution stack is known (e.g., after performing the method 400 of FIG. 4), the SSIM system 228 can assess the solution stack in various domains, such as the service domain, the infrastructure domain, the security domain or a combination thereof, among others.

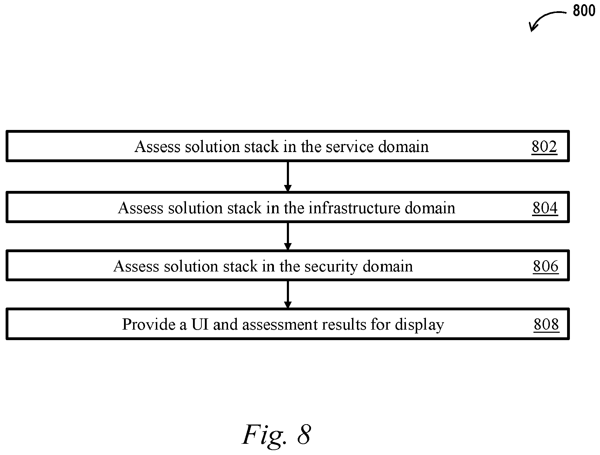

Referring to FIG. 8, a flowchart illustrating a method 800 of monitoring deployed solution stacks according to example embodiments is shown. The method 800 can include assessing a solution stack in the service domain (BLOCK 802). The solution stack can be associated with a corresponding solution. The method 800 can include assessing the solution stack in the infrastructure domain (BLOCK 804). The method 800 can include assessing the solution stack in the security domain (BLOCK 806). The method 800 can include providing a user interface (UI) and assessment results for display on a display device (BLOCK 808).

The method 800 can include the SSIM system (or a component thereof) assessing the solution stack in the service domain (BLOCK 802). Assessing the solution stack in the service domain can include the SSIM system 228 checking for availability of one or more services provided by the solution. For example, the SSIM system 228 can run a script (or software code) to send a request for a given service (or to initiate a session) to the solution. The SSIM system 228 can check one or more solution responses, if any, to request sent. The solution response(s) may include, for example, an acknowledgement of the request or an indication of initiation of the requested service on the part of the solution stack. The response(s) may include a failure or error message. The SSIM system 228 can determine availability of the solution or a service thereof based on, for example, the existence and/or content of solution responses to service requests. The SSIM system 228 can check one or more assets of the solution stack to determine whether a specific software (or application) associated with the requested service is executing thereon. The SSIM system 228 can profile (e.g., send one or more requests for asset related information) the one or more assets of the solution stack for software (or applications) running thereon and check whether the specific software (or application) is among the ones currently executing on the one or more assets. Checking for software (or applications) running on one or more assets of the solution (e.g., after sending the service request) can allow the SSIM system 228 to assess whether or not the solution stack (or assets thereof) is/are showing adequate response to the service request. In some implementations, the SSIM system 228 can employ the asset profiling to diagnose the solution or service(s) thereof at one or more granular levels. For instance, in case a service is down, the SSIM system 228 can provide a detailed diagnosis of which asset(s) or subsystem(s) of the solution is/are not available (or down).

As part of service domain assessment, the SSIM system 228 can determine or estimate a performance metric indicative of, for example, a measure or ranking of the overall performance of the solution. The SSIM system 228 can determine or estimate one or more performance metrics for one or more services provided by the solution. The SSIM system 228 can determine the performance metric(s) for the solution and/or services thereof based on, for example, number or percentage of successful service requests (sent to the solution stack), the time duration the solution takes to respond to each request or to initiate each service, the number of successful parallel requests or a combination thereof, among others.

The method 800 can include the SSIM system 228 (or a component thereof) assessing the solution stack in the infrastructure domain (BLOCK 804). Assessing the solution stack in the infrastructure domain can include the SSIM system 228 checking for or determining various situational awareness attributes for various assets of the solution. For instance, the SSIM system 228 can profile one or more assets of the solution for central processing unit (CPU) usage, memory usage, network performance (e.g., transmission/reception rate, bandwidth usage, short-term packet loss, etc.), disk space, disk latency or a combination thereof, among others. The SSI system can use weighted aggregations for various assets of the solution with respect to a (or each) situational awareness attribute to determine an overall performance of the solution (or a service thereof) with respect to that attribute. The infrastructure domain assessment can provide a performance assessment at the asset level.

The method 800 can include the SSIM system 228 (or a component thereof) assessing the solution stack in the security domain (BLOCK 806). Assessing the solution stack in the security domain can include the SSIM system 228 assessing the security of the solution and/or assets thereof. For instance, the SSIM system 228 can check or verify security of one or more communication links, tunnels or communication transactions, data encryption, security configurations of one or more assets, security zones for various assets, vulnerabilities for various assets or a combination thereof, among others. The SSIM system 228 can determine an assessment of overall security flaws for the solution (or services thereof) based on these verifications.

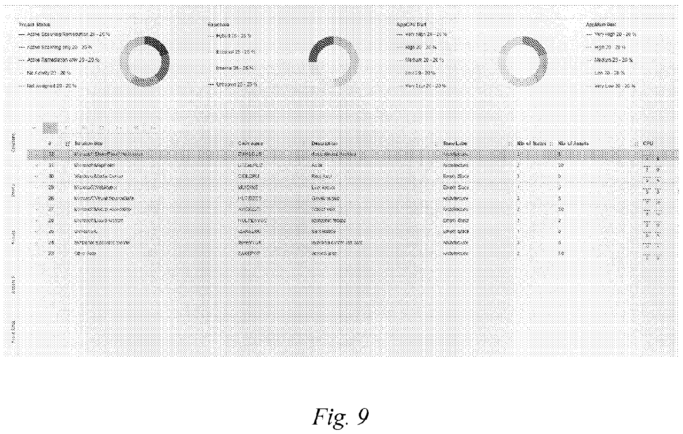

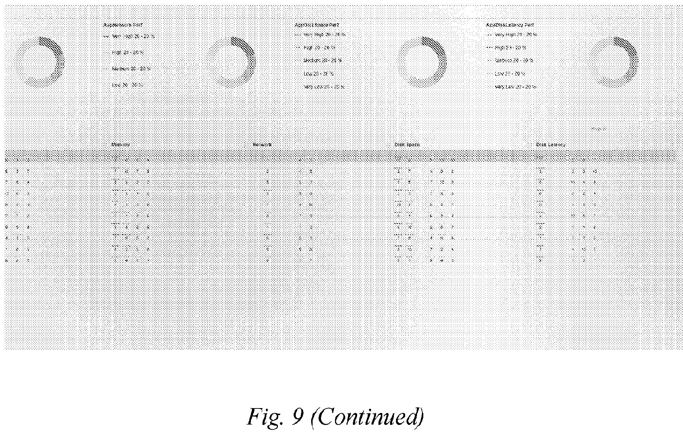

The method 800 can include the SSIM system 228 (or a component thereof) providing a UI and assessment results obtained, for example, at any of the steps 80-896 for display on a display device. Examples of the UI and assessment results that can be provided for display are discussed below with regard to FIGS. 9-15.

Referring to FIGS. 9-15, various screenshots of a UI for displaying solution monitoring data are shown. The UI can include various tabs, such as "Solutions," "Profile," "Assets," "Assets 2," and "Asset DNA," among other potential tabs. FIG. 9 shows an example screenshot of the UI with the "Solutions" tab is activated and while displaying situational awareness data (e.g., CPU usage, memory usage, network performance, disk space usage, and/or disk latency) for various solutions in a computer environment.

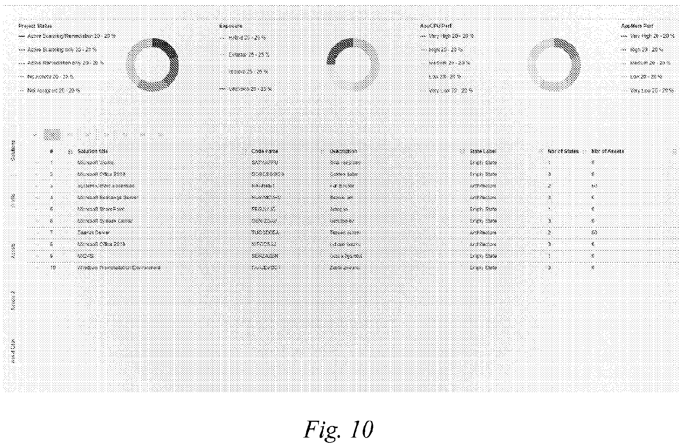

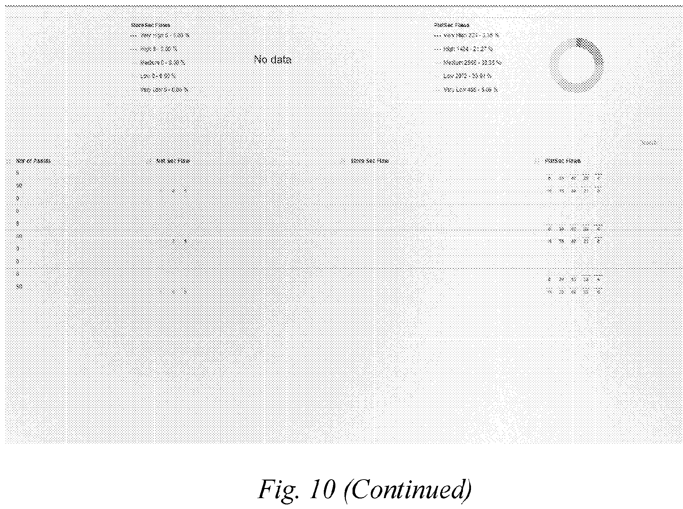

FIG. 10 shows an example screenshot of the UI with the "Solutions" tab is activated and while displaying situational security data (e.g., security flaws at various layers) for various solutions in a computer environment.

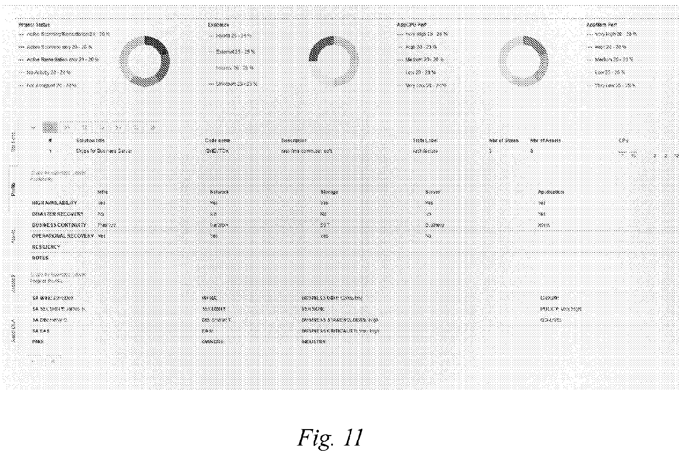

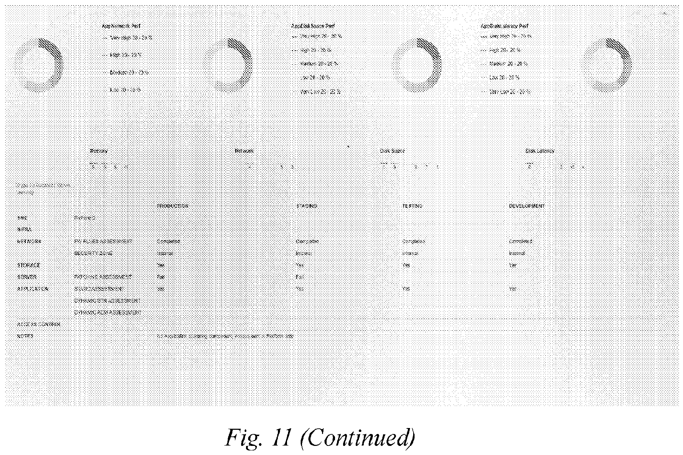

FIG. 11 shows an example screenshot of the UI with the "Profile" tab activated. A user can select a solution and activate the "profile" tab to get a profile of the selected solution, for example, with respect to the solution availability (e.g., assessments with regard to high availability, disaster recovery, business continuity, operational recovery, and/or resiliency, among others) at various layers, ownership, and security at various layers.

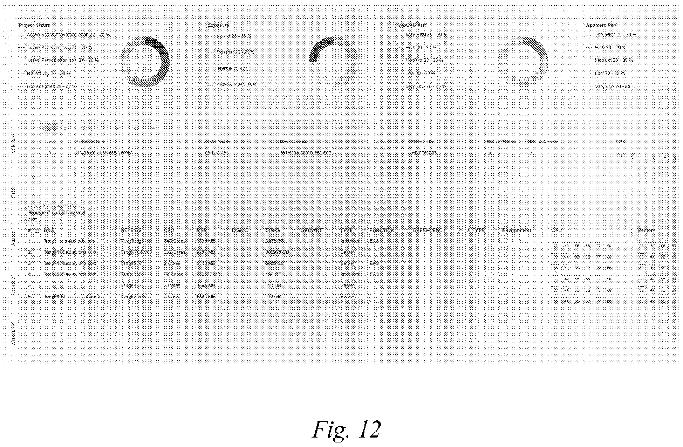

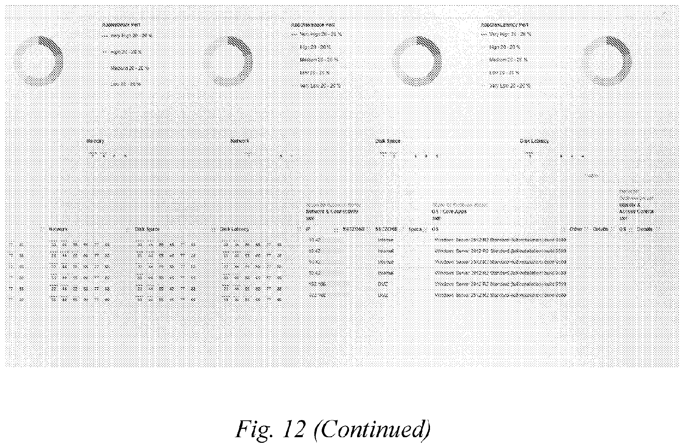

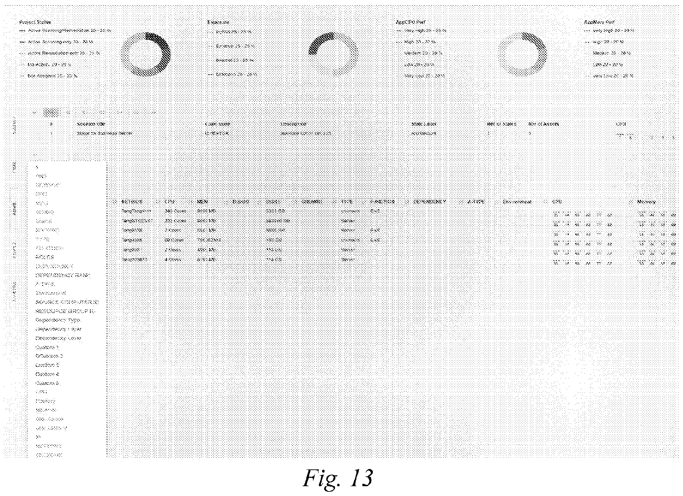

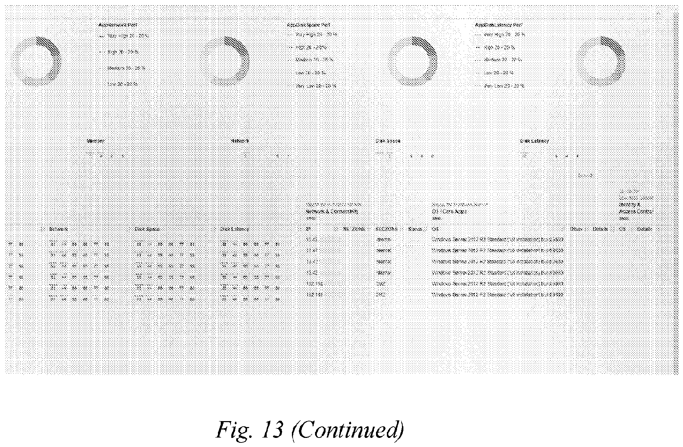

FIG. 12 shows an example screenshot of the UI with the "Assets" tab activated. A user can select a solution and activate the "Assets" tab to view situational awareness metrics of various assets in the solution. FIG. 13 shows another example screenshot of the UI with the "Assets" tab activated. Compared to FIG. 12, FIG. 13 also shows a drop-down window allowing the user to select from a group of parameters or metrics to display for the various assets of the solution.

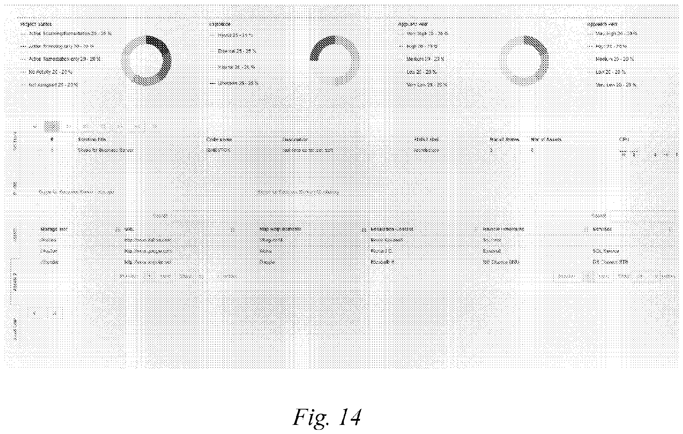

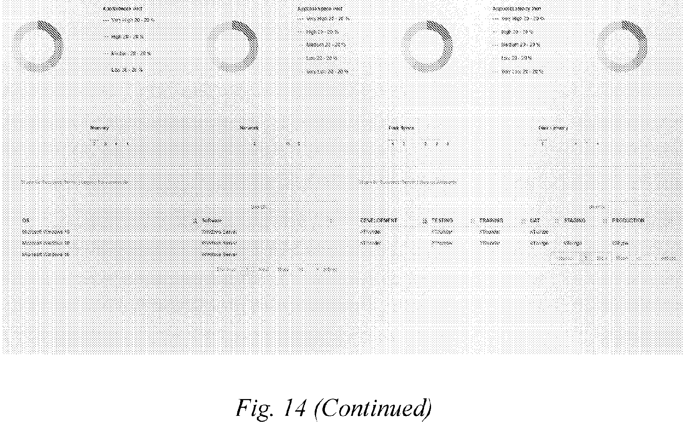

FIG. 14 shows an example screenshot of the UI with the "Assets 2" tab activated. A user can activate the "Assets 2" tab to view other features or attributes of the solution.

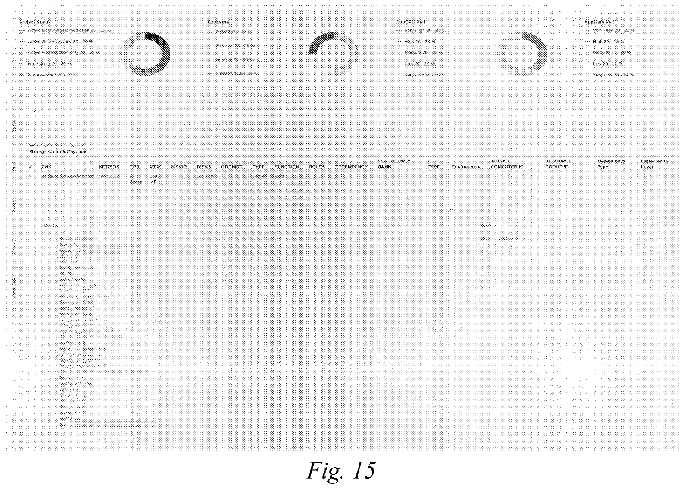

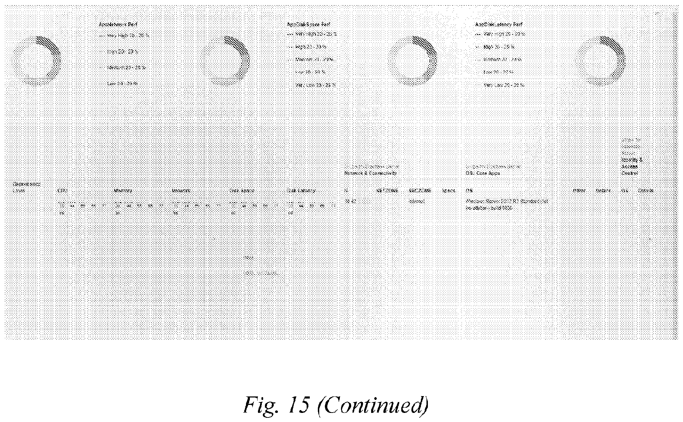

FIG. 15 shows an example screenshot of the UI with the "Asset DNA" tab activated. A user can select an asset of the solution and activate the "Asset DNA tab" tab to view various features or attributes of that asset.

### D. Solution Stack Monitoring as an IT Diagnosis Tool

The monitoring of solutions as described herein can allow for fast and efficient diagnosis of various IT problems associated with computer environments, such the computer environment 200. A user of the SSIM system 228 can define a group of functionally related assets in the computer environment 200 as a solution and run the SSIM system 228 to identify a complete solution stack and/or perform solution monitoring for the solution stack. The solution monitoring can allow for efficient and relatively fast diagnosis of performance or security issues that may arise in relation to group of functionally related assets. For example, a user may define a cluster of virtualization hosts as a solution. Virtual machines (VMs) can move across distinct virtualization hosts in the same cluster. When a VM is consuming high processing power, high memory usage or much of the network resources available, it will affect other VMs running in the same cluster. Also, one VM could be breaching some security requirements (or rules) associated with the computer environment. Given that VMs can move quite often (and possibly repeatedly within short periods of time) between the various virtualization hosts, it is difficult to track the source of the problem.

When a user defines a cluster of virtualization hosts as a solution and runs solution monitoring, the SSIM system 228 can perform efficient and relatively fast diagnosis as solution monitoring that allows for assessing the solution at various domains and/or various layers and providing the corresponding assessment results.

While the SSIM system 228 is described herein as one system that can perform solution stack identification and monitoring, it should be appreciated that one can build separate systems for solution stack identification and solution stack monitoring to perform, for example, the methods 400 and 800, respectively. The SSIM system 228 or any separate systems for solution stack identification and solution stack monitoring can include one or more hardware processors (such as processor 121 of FIGS. 1C and 1D) and a memory (e.g., memory 122 of FIGS. 1C and 1D) storing computer code instructions (e.g., SSIM software 120 in FIG 1C) thereon. The computer code instructions when executed by the one or more processors can perform any of the methods or processes described in this disclosure. The SSIM system 228 can include one or more of the computing devices 100 described with regard to FIGS. 1C and 1D.

Each method described in this disclosure can be carried out by computer code instructions stored on computer-readable medium. The computer code instructions, when executed by one or more processors of a computing device, can cause the computing device to perform that method.

While the disclosure has been particularly shown and described with reference to specific embodiments, it should be understood by those skilled in the art that various changes in form and detail may be made therein without departing from the scope of the invention described in this disclosure.

While this disclosure contains many specific embodiment details, these should not be construed as limitations on the scope of any inventions but rather as descriptions of features specific to particular embodiments of particular inventions. Certain features described in this specification in the context of separate embodiments can also be implemented in combination in a single embodiment. Conversely, various features described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated in a single software product or packaged into multiple software products.

References to "or" may be construed as inclusive so that any terms described using "or" may indicate any of a single, more than one, and all of the described terms.

Thus, particular embodiments of the subject matter have been described. In addition, the processes depicted in the accompanying figures do not necessarily require the particular order shown, or sequential order, to achieve desirable results. In certain embodiments, multitasking and parallel processing may be advantageous.

## Claims

1. A method comprising:
(a) receiving, by one or more computing devices (230) communicatively coupled to a computer environment (200) integrating a solution stack (210, 212, 214), information identifying one or more first assets of the computer environment as belonging to the solution stack;
(b) determining, by the one or more computing devices (230), using first data of the computer environment acquired from one or more first data sources, first attributes of assets identified as belonging to the solution stack;
(c) identifying, by the one or more computing devices (230), using at least one of the first data or the first attributes, second assets of the computer environment related to, but not part of, the assets identified as belonging to the solution stack, the second assets identified as including at least one of:
one or more asset connected to,
one or more assets communicating with,
one or more assets sharing or accessing same data as,
one or more assets sharing storge with,
one or more assets providing the storage to,
one or more assets sharing virtualization host with,
one or more assets providing the virtualization host to, or
one or more assets providing electric power to,
at least one of the assets identified as belonging to the solution stack;
(d) acquiring, by the one or more computing devices (230), from one or more second data sources, second data of the computer environment associated with the second assets, the second data indicative, for each of the second assets, of respective second attributes;
(e) comparing, by the one or more computing devices (230), for each of the second assets, the respective second attributes to the first attributes to determine at least one of matching between the second attributes and the first attributes, physical and/or logical interconnections between the first and second assets, or physical and/or logical interdependencies between the first and second assets;
(f) identifying, by the one or more computing devices (230), based on the comparison, a subset of the second assets as additional assets belonging to the solution stack, the subset of the second assets identified based on a weighted score exceeding a threshold, the weighted score defined in terms of one or more individual scores indicative of at least one of the matching between the second attributes and the first attributes, the matching physical and/or logical interconnections between the first and second assets, or the physical and/or logical interdependencies between the first and second assets;
(g) repeating, by the one or more computing devices (230), steps (b) through (f) until no asset among the second assets is identified as belonging to the solution stack;
(h) generating, by the one or more computing devices (230), using the assets identified as belonging to the solution stack and respective attributes, a current architecture of the solution stack defining at least a complete set of assets forming the solution stack;
comparing the current architecture of the solution stack to a reference architecture or a deployment architecture of the solution stack; and
providing, upon determining a discrepancy between the current architecture of the solution stack and the reference architecture or the deployment architecture of the solution stack, an indication of the discrepancy for display on a display device.

2. The method of claim 1, wherein receiving the information identifying the one or more first assets includes receiving information indicative of a reference architecture of the solution stack, a deployment architecture of the solution stack or a deployment configuration of the one or more first assets.

3. The method of claim 1, further comprising:
acquiring the first data of the computer environment by profiling at least one of the one or more first assets; and
acquiring the second data of the computer environment by profiling at least one of the second assets.

4. The method of claim 1, wherein the second data of the computer environment includes at least one of connectivity tables, communication logs, statistical or historical network data, configuration logs, asset descriptions of the second assets, or an indication of one or more software codes of the second asset.

5. The method of claim 1, wherein the respective second attributes include at least one of:
historical or statistical network data for a communication port associated with the second asset;
login or access data of the second asset;
one or more asset software parameters of the second asset;
physical or logical connectivity parameters; or
data accessed or output by the second asset.

6. The method of claim 1, wherein generating the current architecture of the solution stack includes generating current configurations of the complete set of assets forming the solution stack.

7. The method of claim 6, further comprising:
comparing, for one or more assets of the solution stack, the current configurations to corresponding deployment configurations; and
providing, upon determining a discrepancy between the current configurations and the corresponding deployment configurations of the one or more assets of the solution stack, an indication of the discrepancy for display on a display device.

8. A computer-readable medium with computer code instructions stored thereon, the computer code instructions, when executed by one or more processors communicatively coupled to a computer environment (200) integrating a solution stack (210, 212, 214), cause the one or more processors to perform a method according to any of claims 1-7.

9. A system comprising:
one or more processors (121) communicatively coupled to a computer environment (200) integrating a solution stack (210, 212, 214); and
a memory storing computer code instructions, the computer code instructions, when executed by the one or more processors, cause the one or more processors (121) to perform a method according to any of claims 1-7.

## Patentansprüche

1. Ein Verfahren, das Folgendes beinhaltet:
(a) Empfangen durch eine oder mehrere Rechenvorrichtungen (230), die kommunikativ mit einer Computerumgebung (200) gekoppelt sind, die einen Lösungsstack (210, 212, 214) integriert, von Informationen, die ein oder mehrere erste Assets der Computerumgebung als zu dem Lösungsstack gehörend identifizieren;
(b) Bestimmen durch die eine oder die mehreren Rechenvorrichtungen (230) von ersten Attributen von Assets, die als zu dem Lösungsstack gehörend identifiziert wurden, unter Verwendung erster Daten der Computerumgebung, die von einer oder mehreren ersten Datenquellen erfasst wurden;
(c) Identifizieren durch die eine oder die mehreren Rechenvorrichtungen (230) von zweiten Assets der Computerumgebung, die mit den als zu dem Lösungsstack gehörend identifizierten Assets in Beziehung stehen, aber nicht Teil davon sind, unter Verwendung von wenigstens einem der ersten Daten oder der ersten Attribute, wobei die zweiten Assets als wenigstens eines der Folgenden umfassend identifiziert werden:
ein oder mehrere Assets, die verbunden sind mit,
ein oder mehrere Assets, die kommunizieren mit,
ein oder mehrere Assets, die dieselben Daten gemeinsam nutzen oder
darauf zugreifen wie,
ein oder mehrere Assets, die einen Speicher gemeinsam nutzen mit,
ein oder mehrere Assets, die den Speicher bereitstellen für,
ein oder mehrere Assets, die einen Virtualisierungshost gemeinsam nutzen mit,
ein oder mehrere Assets, die den Virtualisierungshost bereitstellen für, oder
ein oder mehrere Assets, die elektrische Leistung bereitstellen für wenigstens ein der als zu dem Lösungsstack gehörend identifizierten Assets;
(d) Erfassen durch die eine oder die mehreren Rechenvorrichtungen (230) von zweiten Daten der Computerumgebung, die den zweiten Assets zugeordnet sind, von einer oder mehreren zweiten Datenquellen, wobei die zweiten Daten für jeden der zweiten Assets auf jeweilige zweite Attribute hinweisen;
(e) Vergleichen durch die eine oder die mehreren Rechenvorrichtungen (230) der jeweiligen zweiten Attribute mit den ersten Attributen für jeden der zweiten Assets, um wenigstens eines von einer Übereinstimmung zwischen den zweiten Attributen und den ersten Attributen, physischer und/oder logischer Verbindungen zwischen den ersten und den zweiten Assets oder physischen und/oder logischen Abhängigkeiten zwischen den ersten und den zweiten Assets zu bestimmen;
(f) Identifizieren durch die eine oder die mehreren Rechenvorrichtungen (230) auf Grundlage des Vergleichs einer Teilmenge der zweiten Assets als zusätzliche Assets, die zu dem Lösungsstack gehören, wobei die Teilmenge der zweiten Assets auf Grundlage eines gewichteten Scores, der eine Schwelle überschreitet, identifiziert wird, wobei der gewichtete Score i bezogen auf einen oder mehrere individuelle Scores definiert ist, die auf wenigstens eines von der Übereinstimmung zwischen den zweiten Attributen und den ersten Attributen, der Übereinstimmung physischer und/oder logischer Verbindungen zwischen den ersten und den zweiten Assets oder den physischen und/oder logischen Abhängigkeiten zwischen den ersten und den zweiten Assets hinweisen;
(g) Wiederholen durch die eine oder die mehreren Rechenvorrichtungen (230) der Schritte (b) bis einschließlich (f), bis kein Vermögenswert unter den zweiten Assets als zu dem Lösungsstack gehörend identifiziert wird;
(h) Erzeugen durch die eine oder die mehreren Rechenvorrichtungen (230) einer aktuellen Architektur des Lösungsstacks unter Verwendung der als zu dem Lösungsstack gehörend identifizierten Assets und der jeweiligen Attribute, wodurch- wenigstens ein vollständiger Satz Assets definiert wird, die den Lösungsstack ausbilden;
Vergleichen der aktuellen Architektur des Lösungsstacks mit einer Referenzarchitektur oder einer Einsatzarchitektur des Lösungsstacks; und
Bereitstellen bei dem Bestimmen einer Abweichung zwischen der aktuellen Architektur des Lösungsstacks und der Referenzarchitektur oder der Einsatzarchitektur des Lösungsstacks eines Hinweises auf die Abweichung für die Anzeige auf einer Anzeigevorrichtung.

2. Verfahren gemäß Anspruch 1, wobei das Empfangen der Informationen, die das eine oder die mehreren ersten Assets identifizieren, das Empfangen von Informationen umfasst, die auf eine Referenzarchitektur des Lösungsstacks, eine Einsatzarchitektur des Lösungsstacks oder eine Einsatzkonfiguration des einen oder der mehreren ersten Assets hinweisen.

3. Verfahren gemäß Anspruch 1, das ferner Folgendes beinhaltet:
Erfassen der ersten Daten der Computerumgebung durch Erstellen eines Profils von wenigstens einem des einen oder der mehreren ersten Assets; und
Erfassen der zweiten Daten der Computerumgebung durch Erstellen eines Profils von wenigstens einem der zweiten Assets.

4. Verfahren gemäß Anspruch 1, wobei die zweiten Daten der Computerumgebung wenigstens eines von Verbindungstabellen, Kommunikationsprotokollen, statistischen oder historischen Netzwerkdaten, Konfigurationsprotokollen, Asset-Beschreibungen der zweiten Assets oder einen Hinweis auf einen oder mehrere Softwarecodes des zweiten Assets umfassen.

5. Verfahren gemäß Anspruch 1, wobei die jeweiligen zweiten Attribute wenigstens eines der Folgenden umfassen:
historische oder statistische Netzwerkdaten für einen dem zweiten Vermögenswert zugeordneten Kommunikationsanschluss;
Anmelde- oder Zugangsdaten des zweiten Vermögenswerts;
einen oder mehrere Vermögenswertsoftwareparameter des zweiten Vermögenswerts; physische oder logische Verbindungsparameter; oder
Daten, auf die das zweite Asset zugreift oder diese ausgibt.

6. Verfahren gemäß Anspruch 1, wobei das Erzeugen der aktuellen Architektur des Lösungsstacks das Erzeugen aktueller Konfigurationen des vollständigen Satzes Assets, die den Lösungsstack ausbilden, umfasst.

7. Verfahren gemäß Anspruch 6, das ferner Folgendes beinhaltet:
Vergleichen der aktuellen Konfigurationen für einen oder mehrere Assets des Lösungsstacks mit entsprechenden Einsatzkonfigurationen; und
Bereitstellen bei dem Bestimmen einer Abweichung zwischen den aktuellen Konfigurationen und den entsprechenden Einsatzkonfigurationen des einen oder der mehreren Assets des Lösungsstacks eines Hinweises auf die Abweichung für die Anzeige auf einer Anzeigevorrichtung.

8. Ein computerlesbares Medium mit darauf gespeicherten Computercodeanweisungen, wobei die Computercodeanweisungen, wenn sie von einem oder mehreren Prozessoren ausgeführt werden, die kommunikativ mit einer Computerumgebung (200) gekoppelt sind, die einen Lösungsstack (210, 212, 214) integriert, den einen oder die mehreren Prozessoren veranlassen, ein Verfahren gemäß einem der Ansprüche 1-7 durchzuführen.

9. Ein System, das Folgendes beinhaltet:
einen oder mehrere Prozessoren (121), die kommunikativ mit einer Computerumgebung (200) gekoppelt sind, die einen Lösungsstack (210, 212, 214) integriert; und
einen Speicher, der Computercodeanweisungen speichert, wobei die Computercodeanweisungen, wenn sie von dem einen oder den mehreren Prozessoren ausgeführt werden, den einen oder die mehreren Prozessoren (121) veranlassen, ein Verfahren gemäß einem der Ansprüche 1-7 durchzuführen.

## Revendications

1. Un procédé comprenant :
(a) la réception, par un ou plusieurs dispositifs de calcul (230) couplés de façon communicante à un environnement informatique (200) intégrant une pile de solutions (210, 212, 214), d'informations identifiant un ou plusieurs premiers actifs de l'environnement informatique comme appartenant à la pile de solutions ;
(b) la détermination, par les un ou plusieurs dispositifs de calcul (230), à l'aide de premières données de l'environnement informatique acquises à partir d'une ou de plusieurs premières sources de données, de premiers attributs d'actifs identifiés comme appartenant à la pile de solutions ;
(c) l'identification, par les un ou plusieurs dispositifs de calcul (230), à l'aide d'au moins l'un ou l'une des premières données ou des premiers attributs, de deuxièmes actifs de l'environnement informatique concernant, mais sans en faire partie, les actifs identifiés comme appartenant à la pile de solutions, les deuxièmes actifs étant identifiés comme incluant au moins un ou plusieurs actifs parmi ce qui suit :
un ou plusieurs actifs connectés à,
un ou plusieurs actifs communiquant avec,
un ou plusieurs actifs partageant les mêmes données ou accédant aux mêmes données que,
un ou plusieurs actifs partageant un stockage avec,
un ou plusieurs actifs fournissant le stockage à,
un ou plusieurs actifs partageant un hôte de virtualisation avec,
un ou plusieurs actifs fournissant l'hôte de virtualisation à, ou
un ou plusieurs actifs fournissant de l'énergie électrique à,
au moins l'un des actifs identifiés comme appartenant à la pile de solutions ;
(d) l'acquisition, par les un ou plusieurs dispositifs de calcul (230), à partir d'une ou de plusieurs deuxièmes sources de données, de deuxièmes données de l'environnement informatique associées aux deuxièmes actifs, les deuxièmes données étant indicatrices, pour chacun des deuxièmes actifs, de deuxièmes attributs respectifs ;
(e) la comparaison, par les un ou plusieurs dispositifs de calcul (230), pour chacun des deuxièmes actifs, des deuxièmes attributs respectifs aux premiers attributs afin de déterminer au moins une situation parmi un appariement entre les deuxièmes attributs et les premiers attributs, des interconnexions physiques et/ou logiques entre les premiers et deuxièmes actifs, ou des interdépendances physiques et/ou logiques entre les premiers et deuxièmes actifs ;
(f) l'identification, par les un ou plusieurs dispositifs de calcul (230), sur la base de la comparaison, d'un sous-ensemble des deuxièmes actifs en tant qu'actifs supplémentaires appartenant à la pile de solutions, le sous-ensemble des deuxièmes actifs étant identifié sur la base d'un score pondéré dépassant un seuil, le score pondéré étant défini en termes d'un ou de plusieurs scores individuels indicateurs d'au moins une situation parmi l'appariement entre les deuxièmes attributs et les premiers attributs, l'appariement d'interconnexions physiques et/ou logiques entre les premiers et deuxièmes actifs, ou des interdépendances physiques et/ou logiques entre les premiers et deuxièmes actifs ;
(g) la répétition, par les un ou plusieurs dispositifs de calcul (230), des étapes (b) à (f) jusqu'à ce qu'aucun actif parmi les deuxièmes actifs ne soit identifié comme appartenant à la pile de solutions ;
(h) la génération, par les un ou plusieurs dispositifs de calcul (230), à l'aide des actifs identifiés comme appartenant à la pile de solutions et d'attributs respectifs, d'une architecture actuelle de la pile de solutions définissant au moins un ensemble complet d'actifs formant la pile de solutions ;
la comparaison de l'architecture actuelle de la pile de solutions à une architecture de référence ou à une architecture de déploiement de la pile de solutions ; et
la fourniture, lors de la détermination d'une divergence entre l'architecture actuelle de la pile de solutions et l'architecture de référence ou l'architecture de déploiement de la pile de solutions, d'une indication de la divergence pour un affichage sur un dispositif d'affichage.

2. Le procédé de la revendication 1, dans lequel la réception des informations identifiant les un ou plusieurs premiers actifs inclut la réception d'informations indicatrices d'une architecture de référence de la pile de solutions, d'une architecture de déploiement de la pile de solutions ou d'une configuration de déploiement des un ou plusieurs premiers actifs.

3. Le procédé de la revendication 1, comprenant en outre :
l'acquisition des premières données de l'environnement informatique par profilage d'au moins l'un des un ou plusieurs premiers actifs ; et
l'acquisition des deuxièmes données de l'environnement informatique par profilage d'au moins l'un des deuxièmes actifs.

4. Le procédé de la revendication 1, dans lequel les deuxièmes données de l'environnement informatique incluent au moins un ensemble parmi des tables de connectivité, des journaux de communication, des données réseau statistiques ou historiques, des journaux de configuration, des descriptions d'actifs des deuxièmes actifs, ou une indication d'un ou de plusieurs codes logiciels du deuxième actif.

5. Le procédé de la revendication 1, dans lequel les deuxièmes attributs respectifs incluent au moins un ensemble parmi ce qui suit :
des données réseau historiques ou statistiques pour un port de communication associé au deuxième actif ;
des données d'ouverture de session ou d'accès du deuxième actif ;
un ou plusieurs paramètres de logiciel d'actif du deuxième actif ;
des paramètres de connectivité physiques ou logiques ; ou
des données auxquelles accède le deuxième actif ou émises par le deuxième actif.

6. Le procédé de la revendication 1, dans lequel la génération de l'architecture actuelle de la pile de solutions inclut la génération de configurations actuelles de l'ensemble complet d'actifs formant la pile de solutions.

7. Le procédé de la revendication 6, comprenant en outre :
la comparaison, pour un ou plusieurs actifs de la pile de solutions, des configurations actuelles à des configurations de déploiement correspondantes ; et
la fourniture, lors de la détermination d'une divergence entre les configurations actuelles et les configurations de déploiement correspondantes des un ou plusieurs actifs de la pile de solutions, d'une indication de la divergence pour un affichage sur un dispositif d'affichage.

8. Un support lisible par ordinateur sur lequel sont stockées des instructions de code informatique, les instructions de code informatique, lorsqu'elles sont exécutées par un ou plusieurs processeurs couplés de façon communicante à un environnement informatique (200) intégrant une pile de solutions (210, 212, 214), amenant les un ou plusieurs processeurs à mettre en oeuvre un procédé selon n'importe lesquelles des revendications 1 à 7.

9. Un système comprenant :
un ou plusieurs processeurs (121) couplés de façon communicante à un environnement informatique (200) intégrant une pile de solutions (210, 212, 214) ; et
une mémoire stockant des instructions de code informatique, les instructions de code informatique, lorsqu'elles sont exécutées par les un ou plusieurs processeurs, amenant les un ou plusieurs processeurs (121) à mettre en oeuvre un procédé selon n'importe lesquelles des revendications 1 à 7.
